# EUROPEAN PATENT APPLICATION

(11) **EP 1 814 292 A1**
(43) Date of publication of application: **01.08.2007**
(21) Application number: 07108484.2
(22) Date of filing: 07.10.2005
(51) Int. Cl.: H04M 3/42

(54) **Call Handoff Between Subscriber's Multiple Devices Associated with Multiple Networks**

(30) Priority: 08.10.2004 US 961387; 08.10.2004 US 962193
(62) Divisional of application: 05804184.9
(71) Applicant: Sonus Networks, Inc., Westford, MA 01886 (US)
(72) Inventor: Sasksena, Vikram, Acton, MA 01720 (US); Reddy, Umamaheswar, Malborough, MA 01752 (US); Hluchyj, Mike, Wellesley, MA 02481 (US)
(74) Representative: Greene, Simon Kenneth

(57) **Abstract**

Described are methods and apparatus, including computer program products, for common telephony services to multiple devices associated with multiple networks. A centralized packet-based network is provided that is capable of providing the common telephony services associated with a subscriber to a first telephony device of the subscriber associated with a first network and to a second telephony device of the subscriber associated with a second network. Each call placed to or from a subscriber's device is routed to the centralized, packet-based network. Each device can be assigned an identical unique identifier. The packet-based service provider network can perform a handoff of the call while the call is in process from the first device associated with the first network to the second device associated with the second network.

## Description

### FIELD OF THE INVENTION

The present invention relates to common telephony services to multiple devices associated with multiple networks.

### Acronyms

The written description uses some acronyms to refer to various services, messages, and system components, defined as follows:
1 times Evolution - Data Only (1xEv-DO)
1 times Radio Transmission Technology (1x-RTT)
American National Standards Institute (ANSI)
Code Division Multiple Access (CDMA)
Compact Wireless Markup Language (CWML)
Dual Tone Multi Frequency (DTMF)
Enhanced Data Rates for GSM Evolution (EDGE)
Gateway Mobile Switching Center (GMSC)
General Packet Radio Services (GPRS)
Generic Address Parameter (GAP)
Global System for Mobile communications (GSM)
Home Location Register (HLR)
Initial Address Message (IAM)
Institute of Electrical and Electronics Engineers (IEEE)
Integrated Services Digital Network (ISDN)
ISDN User Part (ISUP)
Internet Protocol (IP)
Internet Service Provider (ISP)
Line Access Gateway (LAG)
Local Number Portability (LNP)
Location Routing Number (LRN)
Mobile Switching Center (MSC)
Mobile Virtual Network Operator (MVNO)
Number Portability Administration Center (NPAC)
Packet Data Serving Node (PDSN)
Personal Communications Service (PCS)
Personal digital Assistant (PDA)
Personal Identification Number (PIN)
Private Branch Exchange (PBX)
Public Switched Telephone Network (PSTN)
Radio Access Network (RAN)
Radio Network Controller (RNC)
Second Generation (2G)
Session Initiation Protocol (SIP)
Signaling System 7 (SS7)
Temporary Local Directory Number (TLDN)
Terminal Adapter (TA)
Time Division Multiple Access (TDMA)
Time Division Multiplexing (TDM)
Transmission Control Protocol/Internet Protocol (TCP/IP)
Universal Mobile Telecommunications System (UMTS)
Uniform/Universal Resource Locator (URL)
Voice Over Internet Protocol (VoIP)
Wide Area Network (WAN)
Wideband Code Division Multiple Access (W-CDMA)
Wireless Application Protocol (WAP)
Wireless Local Area Network (WLAN)

### BACKGROUND

Typically, telephony service providers (e.g., AT&T, Verizon, Sprint, MCI, etc.) each have built their own networks and offer their own services to compete for their share of the telephone market subscribers. Probably the most popular and widely used telephone in the United States is a landline telephone. A landline telephone is a telephone that is physically connected to a telephony service provider through a wire (e.g., a phone that plugs into a phone jack in the wall). These devices are also called wireline devices. Although there are wireless varieties that allow a user to walk around within their homes, the base receiver is private (e.g., not shared by other subscriber's not living in the household), is still plugged into the wall, and transmits/receives signals to/from a local service provider via a wire. Some landline phones have no additional features and still transmit/receive analog signals to/from the local service provider. These "dumb" phones are sometimes referred to as black phones. Companies have begun to offer telephony services to users via broadband connections (e.g., DSL, cable, etc.) to the subscriber's house. For example, subscribers of cable company telephony services use analog phones (e.g., black phones) inside the house. In these situations, there is a converter box that converts the analog signal into a digital signal transmitted over the cable to the cable company's telephony switches to process the call.

Other varieties of landline (wireline) phones include digital phones and Internet Protocol (IP)-based phones. In some examples, these phones plug directly into a digital network at a company. The company uses a private branch exchange (PBX) switch to route the calls appropriately, either to other extensions within the company, or to the public switched telephone network (PSTN) if the called party is external to the company. With the continued improvement in voice over IP (VoIP) technology, some companies are trying to offer phone services over an Internet connection, for example, changing the microphone and speakers of a desktop computer into a handset for telephony services. Any of the landline phone examples above can be referred to as fixed phones because their use is fixed to a location set by the connecting wire (or in the case of the wireless fixed device, the range of the signal between the handset and the private base station with which it is associated).

A class of telephone devices that are not fixed are referred to as mobile phones. These phones are mobile because they can operate at virtually any location at which they can transmit and receive a radio signal to one or more base stations that recognize the subscriber. There are many different varieties of mobile phones, for example, cellular phones, satellite phones, and wireless local area network (WLAN) phones. Cellular phones communicate with base stations that provide coverage for a certain geographic area, referred to as a cell. Unlike the wireless landline devices, these base stations communicate with mobile devices of all of the subscribers of that wireless network. As a mobile phone moves, the call moves with the device, being transferred from one base station to another base station, referred to as handoff. There are varieties of technologies used to implement cellular networks. For example, cellular networks can operate within different frequency spectrums, for example, the 800 MHz spectrum and the 1900 MHz spectrum (e.g., for personal communications service (PCS) networks). Cellular networks can use different multiplexing technologies to incorporate multiple callers onto a carrier frequency channel. For example, networks in the United States can be based on a global system for mobile communications (GSM) standard, a time division multiple access (TDMA) standard, or a code division multiple access (CDMA) standard.

Another mobile technology that is emerging is a WLAN mobile device. The WLAN device is an IP-based mobile device that communicates with access points of an IP-based network. In some examples, the communication between the WLAN device and the access point conforms to the Institute of Electrical and Electronics Engineers (IEEE) 802.11 standards (e.g., 802.11a, 802.11b, 802.11g, etc., also referred to as Wi-Fi). The WLAN device enables a phone call to occur over an IP-based network using VoIP technology. In other examples, the WLAN technology can include UltrawideBand (e.g., an IEEE 802.15 standard) and WiMAX (e.g., an IEEE 802.16 standard), a Bluetooth compliant network, etc.

Typically, people use two landline phones (e.g., one at home and one at work) and a cellular phone (e.g., commuting between home and work). Some also have a data device, such as personal digital assistant (PDA), that connects to a wireless network to transmit and receive data, such as email and Web pages. These wirelessly connected PDA devices also offer phone services to subscribers. Many times, the four devices use four different networks operated by four different companies. This results in four different phone numbers that someone gives out to make sure he can always be reached.

Some service providers offer follow-me services. These follow-me services forward an incoming call to a subscriber from one device to another according to the prioritized phone numbers that the subscriber gives to the service provider. For example, if the subscriber has a follow-me service with the service provider for his landline phone at home, the follow-me service forwards an incoming call from the landline phone at home to the landline phone at work first, and then to his cellular phone, following the prioritized list of phone numbers. If the subscriber does not answer any device, the service provider sends the call to a voice mailbox associated with the landline phone at home. Because the follow-me service is a call forwarding service, the follow-me service does not work in the opposite direction. If someone calls the subscriber's cellular phone first, and there is no answer, the service provider for the cellular phone directs the call to the voice mail system for that cellular phone network. The subscriber then has multiple mail boxes to check to make sure he listens to all of the missed calls. If the cellular phone network service provider offers a follow-me service also, the subscriber can set up another prioritized list of phone numbers with the service provider of the cellular phone network. In this typical example, the person with the four devices manages four phone numbers, four follow-me services, four voice mail boxes, etc.

### SUMMARY OF THE INVENTION

The description describes methods and apparatus, including computer program products, for common telephony services to multiple devices associated with multiple networks. In general, in one aspect, there is a method for providing common telephony services to a subscriber having a plurality of devices associated with a plurality of different networks. The method includes assigning an identical unique identifer to a first telephony device and a second telephony device associated with a first network and second network, respectively and receiving, via a packet-based network, a call set-up request associated with the unique identifier. The method includes routing, via the packet-based network, a call to or from the first device, the second device, or the first and second devices, based on a routing preference.

In another aspect, there is a method for providing common telephony services to a subscriber having a plurality of devices associated with a plurality of different networks. The method includes providing a centralized packet-based network capable of providing common telephony services, associated with the subscriber, to a first telephony device associated with a first network and to a second telephony device associated with a second network and routing each call placed to or from the subscriber to the centralized packet-based network.

In another aspect, there is a packet-based communications network configured to provide centralized telephony services to a subscriber having a plurality of devices associated with a plurality of different networks. The network includes a plurality of edge servers in communication with respective communications networks offering telephony services using disparate technologies. The network also includes one or more provider servers configured to route a call to a first telephony device associated with the subscriber through one of the disparate communications networks based on a routing preference, wherein the first telephony device is one of the plurality of telephony devices associated with the subscriber and the plurality of telephony devices are assigned an identical identifier and correspond to the plurality of communications networks.

In another aspect, there is a system for common telephony services to multiple devices associated with multiple networks. The system includes a means for routing a first call from a first device associated with a first network to a service provider network, a means for routing a second call from a second device associated with a second network to a service provider network, and a means for applying a common set of services to each call made from or to a subscriber using the first device or the second device.

In another aspect, there is a computer program product, tangibly embodied in an information carrier, for common telephony services to multiple devices associated with multiple networks. The computer program product including instructions being operable to cause data processing apparatus to assign an identical unique identifier to a first telephony device and a second telephony device associated with a first network and second network, respectively, receive, via a packet-based network, a call associated with the unique identifier from the first network or the second network, and route, via the packet-based network, the call to the first device, the second device, or the first and second devices, based on a routing preference.

In another aspect, there is a method used in a centralized, packet-based network with a subscriber having a plurality of devices corresponding to a plurality of different networks, for handoff of a call from a first device of the subscriber to a second device of a subscriber. The method includes assigning an identical unique identifier to each of a plurality of devices corresponding to a plurality of different networks, the unique identifier being associated with a subscriber associated with the plurality of devices, receiving, by the centralized, packet-based network, a call associated with the unique identifier, and routing, by the centralized network, the call to a first device of the plurality of devices used on a first communications network of the plurality of networks. The method also includes establishing, by the centralized network, a call leg to a second device of the plurality of devices used on a second communications network of the plurality of networks and routing, by the centralized network, the call to the second device after the call leg is established.

In another aspect there is a method. The method includes receiving, by a service provider network, a call associated with a subscriber having a plurality of devices associated with a plurality of different networks and performing, by the service provider network, a handoff of the call while the call is in process from a first device of the plurality of devices associated with a first communications network to a second device of the plurality of devices used on a second communications network.

In another aspect, there is a system that includes a plurality of servers. They are configured to assign an identical unique identifier to each of a plurality of devices corresponding to a plurality of different networks, the unique identifier being associated with a subscriber associated with the plurality of devices, to receive, by the centralized, packet-based network, a call associated with the unique identifier, and to route, by the centralized network, the call to a first device of the plurality of devices used on a first communications network of the plurality of networks. They are also configured to establish, by the centralized network, a call leg to a second device of the plurality of devices used on a second communications network of the plurality of networks and route, by the centralized network, the call to the second device after the call leg is established.

In another aspect, there is a computer program product, tangibly embodied in an information carrier, for common telephony services for multiple devices associated with multiple networks. The computer program product includes instructions being operable to cause data processing apparatus to assign an identical unique identifier to each of a plurality of devices corresponding to a plurality of different networks, the unique identifier being associated with a subscriber associated with the plurality of devices, to receive, by the centralized, packet-based network, a call associated with the unique identifier, and to route, by the centralized network, the call to a first device of the plurality of devices used on a first communications network of the plurality of networks. The computer program product also includes instructions being operable to cause data processing apparatus to establish, by the centralized network, a call leg to a second device of the plurality of devices used on a second communications network of the plurality of networks, and to route, by the centralized network, the call to the second device after the call leg is established.

In another aspect, there is a system for common telephony services to multiple devices associated with multiple networks. The system includes a means for routing a call from a first device associated with a first network to a service provider network, and a means for transferring the call from the first device to a second device associated with a second network to a service provider network while the call is in process.

In other examples, any of the aspects above can include one or more of the following features. One or more provider servers can include any combination of a call server, a route server, and an applications server. The unique identifier can be a phone number. The unique identifier can be a universal resource location (URL). The first device from the first network can originate the call set-up request, including sending a called number to the packet-based network via a data channel. In such an example routing includes routing the call to or from the first device, and the routing preference is based on the first device originating the call. The packet-based network can provide a temporary phone number associated with the called number to the first device. The packet-based network can associate the temporary phone number with the called number. The temporary phone number can be used to originate the call. The temporary phone number can be provided via the data channel. The packet-based network can establish a call Ieg using the called number and connect the call leg associated with the called number and the call routed to or from the first device. The data path can be based on a general packet radio services (GPRS) standard, an enhanced data rates for GSM evolution (EDGE) standard, a universal mobile telecommunications system (UMTS) standard, a wideband code division multiple access (W-CDMA) standard, a 1 times radio transmission technology (1x-RTT) standard, a 1 times evolution - data only (1xEv-DO) standard, or a CDMA2000 standard.

The call set-up request can be originated by the first device from the first network, wherein routing includes routing the call to the second device. The determination of the routing preference can use a key press sequence. The key press sequence includes an association with the second device. A first edge server can be assigned to facilitate communication between the packet-based network and the first network and a second edge server can be assigned to facilitate communication between the packet-based network and the second network. All calls associated with the unique identifier originating in the first network can be routed to the packet-based network. A dedicated circuit can be employed by in the first network to route all calls originated by the first device to an edge server associated with the packet-based network.

The first network can add an indicator to all calls originated by the first device. The indicator can include a prefix of one or more digits. The indicator can include a carrier code. The packet-based network can be unrelated to the first network or the second network. The first network can be unrelated to the second network. The first network can be based on a technology different from the second network. The first telephony device can be a first radio included in a single physical device and the second telephony device can be a second radio included in the single physical device. The first radio can transition into a standby mode when the second radio is in an active mode. The second radio can transition into a standby mode when the first radio is in an active mode.

The first network can include a landline telephone network and the second network can include a wireless telephone network. The first network can include a landline telephone network. In such a case, the call can be routed to the first device in the first network by using a LRN. The unique identifier can be inserted into GAP digits. The first network can include a cellular telephone network. In such a case, the call can be routed to the first device in the first network by using a TLDN. In some examples, neither the first network nor the second network include a private branch exchange (PBX). The common telephony services can include, for example, quiet time, parallel ringing, and single voice mail for all devices. The subscriber can be enabled to define the routing preference. The default values of the routing preference can be defined as routing, firstly, to a WLAN device associated with the subscriber, routing, secondly, to a cellular device associated with the subscriber, and routing, thirdly, to a landline device associated with the subscriber.

An indication can be received to initiate a transfer of the call from the first device to the second device. The indication can include a predetermined sequence of one or more DTMF tones associated with a sequence of key presses. The first device can determine that the transfer is desired and the indication can be transmitted to the centralized network. The indication can be determined based on periodically monitoring registration of the WLAN phone. The indication can be determined based on periodically monitoring a signal strength. The data path through a cellular network can be used for transmitting the indication. The centralized network can determine to transfer the call from the first device to the second device. The first network can include a landline telephone network and the second network can include a wireless telephone network.

Implementations can realize one or more of the following advantages. The user of four devices associated with four different networks can manage one set of universal telephony services for all of his different devices. The user can receive one phone number that is actually assigned to all of the devices. The centralized service provider of the universal services can employ an IP network to provide the services, taking advantage of the most recent technological advances. Further, using an IP-based network allows the centralized service provider of the universal services to seamlessly integrate voice and data using the same packet-based technology. The single service provider is a single point to the customer for all of their telephony devices, including a single bill, one customer support number, etc. The list of features that can be offered by the single service provider, using the centralized IP network, goes beyond what is available on any single existing network (e.g., PSTN, cellular).

The details of one or more examples are set forth in the accompanying drawings and the description below. Further features, aspects, and advantages of the invention will become apparent from the description, the drawings, and the claims.

### BRIEF DESCRIPTION OF THE DRAWINGS

FIGS. 1A and 1B are block diagrams showing exemplary networks and devices involved with providing common telephony services to multiple devices associated with multiple networks.
FIGS. 2-10 are block diagrams showing exemplary processes involved with providing common telephony services to multiple devices associated with multiple networks.
FIG. 11 is a block diagram showing additional exemplary networks and devices involved with providing common telephony services to multiple devices associated with multiple networks.

### DETAILED DESCRIPTION

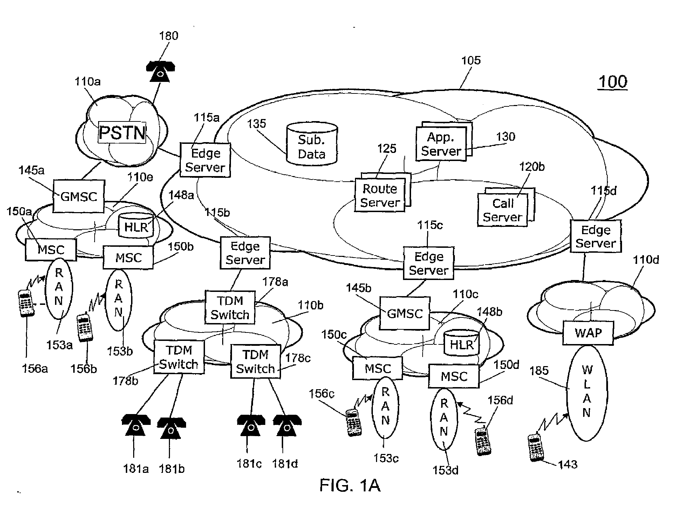

FIG. 1A illustrates an exemplary system 100 for providing common telephony services to multiple devices associated with multiple networks. The system 100 includes a plurality of communications networks 105, 110a, 110b, 110c, 110d, and 110e. The network 105 provides common telephony services to multiple devices associated with and communicating through the other networks 110a, 110b, 110c, 110d, and 110e. The network 105 includes edge servers 115a, 115b, 115c, and 115d, that serve as the media and signal gateways to the networks 110a, 110b, 110c, and 110d, respectively. The network 110e communicates with the network 105 through the network 110a.

The network 105 also includes a call server 120, a route server 125, an application server 130, and a subscriber database 135. In general, the call server 120 handles the session management and signaling (e.g., calls, videos, gaming). The route server 125 provides the routing information to route a call. The application server 130 determines the services to which the subscriber has subscribed, and often remains in the call loop to provide additional services during the call. The subscriber database 135 includes information about the subscriber and the services to which the subscriber has subscribed and services specific data. The physical implementation of each server 115, 120, 125, 130 can vary without losing the ability to perform the processes as described herein. For example, each server 115, 120, 125, 130 can be implemented using multiple servers (e.g., distributed server farm, multiple server blades, etc.) or all of the servers 115, 120, 125, 130 can be combined and implemented into a single server, or some partial combination.

The networks 105, 110a, 110b, 110c, 110d, and 110e are communications networks capable of routing a call. The networks 105, 110a, 110b, 110c, 110d, and 110e are based on different technologies. The networks 105 and 110d are IP, packet-based networks that use VoIP technology to transform voice information into IP packets and route the IP packets through the networks. The network 110d includes a WLAN portion 140 that includes one or more wireless transceivers (e.g., access points) that communicate with a WLAN phone device 143. The system 100 uses the session initiation protocol (SIP) standard to communicate with the WLAN phone device 143..

The networks 110c and 110e are cellular phone networks that use cellular phone technology (e.g., based on a CDMA standard, based on a GSM standard) to manage and route calls. The networks 110c and 110e optionally include gateway mobile switching centers (GMSCs) 145a and 145b that serves as interfaces for the networks 110e and 110c, respectively, to other networks. The GMSCs 145 are capable of handling different signaling standards for communication with other networks. In examples where the GMSC 145 is not included in a cellular network, the edge server can communicate directly with the MSCs. The networks 110c and 110e also include home location registers (HLRs) 148a and 148b. Unlike a fixed network, where every subscriber belongs to a local exchange, in a mobile network, the subscriber belongs to the network. The HLRs 148 are databases for persistently storing subscriber data for the mobile network. The HLRs 148 is continuously being updated (e.g., by a MSC) with the location of the subscriber, such as whether the subscriber is in a service area of a mobile switching center (MSC) 150 or in a different network. The GMSC 145 uses this information when receiving and routing a call from another network. The HLRs 148 can be independent network elements or integrated into MSCs 150.

The networks 110c and 110e also include MSCs 150a, 150b, 150c, and 150d. The MSCs 150a, 150b, 150c, and 150d are switching nodes having the specialized functions required by mobile networks, such as those relating to handoff between the MSCs 150, and manage one or more base stations in their corresponding radio access network (RAN) 153a, 153b, 153c, and 153d, respectively. The base stations are associated with transceiver equipment for transmitting and receiving (e.g., antennas for one or more cells) and equipment for encryption/decryption and signal strength measurement. The transceivers communicate with cellular mobile devices 156a, 156b, 156c, and 156d, generally 156.

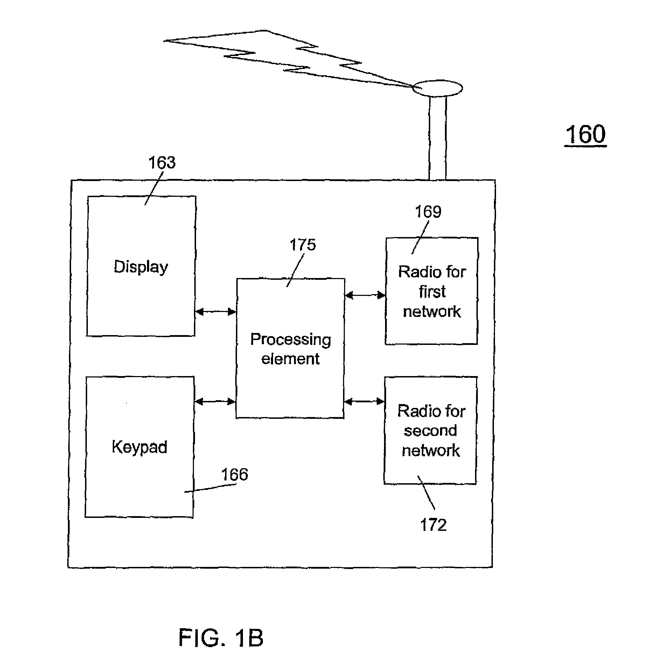

Generally, the mobile devices 156 are specialized to the cellular network (e.g., 110c, 110e) to which they are associated. For example, when a subscriber subscribes to cellular service with Verizon, they buy a cellular mobile device with CDMA technology. If a subscriber subscribes to cellular service with T-Mobile, they buy a cellular mobile device with GSM technology. A mobile device with CDMA technology cannot communicate with a network using GSM technology. Similarly, a WLAN device cannot communicate with a CDMA network or a GSM network. As electronic components continue to shrink and market demand increases, however, mobile device manufacturers are starting to put multiple mobile devices (e.g., WLAN technology, CDMA technology, GSM technology, etc.) into a single physical device. FIG. 1B illustrates an exemplary single physical device 160 that includes multiple mobile devices within the same package.

The mobile device 160 includes a common display 163 and a common keypad 166 so the user can interact with the mobile device 160. The mobile device 160 also includes a first radio 169 (e.g., necessary electrical circuitry) to communicate with a network of a first technology and a second radio 172 (e.g., necessary electrical circuitry) to communicate with a network of a second technology. The mobile device 160 also includes a processing element 175 that coordinates the communication between the common display 163 and keypad 166 and each of the radios 169 and 172. For example, the first radio 169 can be based on CDMA technology (i.e., configured to communicate with a CDMA network) and the second radio 172 can be based on GSM technology (i.e., configured to communicate with a GSM network). An example of such a device is a SCH-a790 phone manufactured by Samsung. In another example, the first radio 169 can be based on cellular technology (e.g., GSM) and the second radio 172 can be based on WLAN technology (i.e., configured to communicate with a WLAN network). An example of such a device is a CN620 mobile office device manufactured by Motorola.

Referring back to FIG. 1A, the network 110a represents the PSTN, which is an amalgamation of different telephone-related communications networks owned and operated by many different companies. The different networks on the PSTN 110a communicate and route calls to/through each other using standardized telephony protocols. The PSTN 110a routes calls to the edge server 115a of the network 105 based on the called phone number belonging to a subscriber associated with the network 105. In many cases, users of analog black phones (e.g., phone device 180) are connected to the PSTN 110a, typically through a local exchange that has a wired connection to the house. The PSTN 110a can be based on time division multiplexing (TDM) technology, and if so, the edge server 115a represents a gateway that converts TDM traffic to IP and vice-versa.

The network 110b represents a traditional wired network using TDM switches 178a, 178b, and 178c, generally 178. The TDM switches 178b and 178c are connected to analog black phones 181a, 181b, 181c, and 181d. These black phones 181a, 181b, 181c, and 181d are owned by the subscribers of the network 105. When calls are placed using the black phones 181a, 181b, 181c, and 181d, the network 110b routes the call directly to the edge server 115b so network 105 can process and manage the call. Similarly, when a subscriber makes a call on the mobile network 110c using the mobile cellular device 156d, the mobile network 110c routes the call directly to the edge server 115c so network 105 can process and manage the call. Typically, the service provider who owns and operates the centralized network 105 does not own or operate the networks 110b and 110c. Instead, the service provider of the network 105 has an agreement with the owners and operators of the networks 110b and 110c to forward all calls from the subscriber's devices directly to the corresponding edge server 115. This idea is somewhat analogous to the mobile virtual network operator (MVNO) model used by resellers of cellular phone services.

The system 100 can route subscriber calls from the directly connected networks (e.g., 110b and 110c) in a variety of different ways. For example, inserted prefix digits can be used. In such an example, when a subscriber makes a call from his device (e.g., his cellular device 156d), the components (e.g., MCG, HLR, VLR, etc.) of the network 110c serving that device (e.g., 150d) can be programmed to identify the handset (e.g., the calling party). If the identity is that of a MVNO subscriber (e.g., a subscriber to the network 105), then the network 110c prefixes the called number with a unique set of digits. Based on these unique prefix digits, the network 110c routes the call to the edge server 115c. As the call is passed to the edge server 115c, the unique prefix digits are removed (e.g., by the edge server 115c) from the called number. This technique enables a call originated by the subscriber to be routed to the network 105 for processing and services. This technique also advantageously prevents potential problems when a subscriber calls another subscriber of the same service provider (e.g., network 105). As both the calling and called numbers are subscribers, routing in a cellular network (e.g., 110c) solely based on the subscriber identity can cause routing back to the service provider network (e.g., 105) when the service provider network attempts to complete the call to the called subscriber, since the mobile network is configured to route based on subscriber identity. Prefixing digits to the called number when a handset originates a call and stripping these digits at the service provider network (e.g., 105) avoids this "routing loop". With the added prefix technique, only the calls originating in the network 110c have the added prefix, so only those originating calls are routed to the network 105.

In another example, a carrier code is used instead of the prefix digits. In such an example, when a subscriber makes a call from his device (e.g., his cellular device 156d), the network 110c serving that device (e.g., 150d) can be programmed to identify the handset (e.g., the calling party). If the identity is that of a MVNO subscriber (e.g., a subscriber to the network 105), then the network 110c adds a predesignated carrier code to the signaling messages. Based on this carrier code, the network 110c routes the call to the edge server 115c. Similarly, incoming calls to the network 110c have a different predesignated carrier code, so that the incoming call is routed to the subscriber's device. This technique enables a call originated by the subscriber to be routed to the network 105 for processing and services.

Although these techniques (e.g., using prefix digits and carrier codes) have been described using the network 110c for an example, these techniques can also be used on other networks, such as the wireline network 110b. Also, wireline networks (e.g., 110b) can also physically hardwire calls originating at a subscriber's device (e.g., 181a). For example, there can be a physical dedicated circuit from the TDM switch serving the subscriber's device (e.g., switch 178b for device 181a) to the edge server serving the network 110b (e.g., 115b).

As a MVNO example, Virgin Mobile USA sells cellular phone services to its subscribers, even though it does not own or operate any cellular phone networks. Instead, Virgin Mobile USA has an agreement with Sprint to recognize the devices of Virgin Mobile USA subscribers and provide some or all of the cellular phone services, for which Virgin Mobile USA will pay Sprint. Some resellers might offer supplementary services (often unrelated to telephony) to try to further distinguish its brand from the owner and operator of the cellular network. The system 100 follows a MVNO-like model, but the service provider of the network 105 provides most or all of the telephony services. The networks 110a, 110b, 110c, 110d, and 110e serve as "dumb pipes," simply transmitting voice and signaling data across the network between the device (e.g., 143,156,180, 181) and the corresponding edge server (e.g., 115). It is noteworthy that in some examples, the service provider of network 105 can arrange to have the administrator of the other networks (e.g., network 110b) provide certain services, such as emergency services.

For example, the service provider of network 105 can provide one number ubiquitous service over multiple networks by partnering arrangements with networks not owned by the service provider. The subscriber's end-points (e.g., devices 181c, 153c, and 143) are registered with pre-designated call servers 120 in the service provider's network 105. An agreement is made with the operator of a landline network (e.g., 110b) to "hard" route all of the calls of the subscribers of the network 105 to an edge server (e.g., 115b) designated by the service provider. The wireline operator is now a "dumb pipe" to get to the service providers network 105. Similarly, an agreement is made with the operator of the cellular network (e.g., 110c) to "hard" route all calls of the subscribers of the network 105 to an edge server (e.g., 115c) designated by the service provider. The cellular network (e.g., 110c) continues to handle cellular registrations and handoffs for the subscriber's cellular device (e.g., 153c) within the cellular network 110c. The cellular network is now also a "dumb pipe" to get to the service providers network 105.

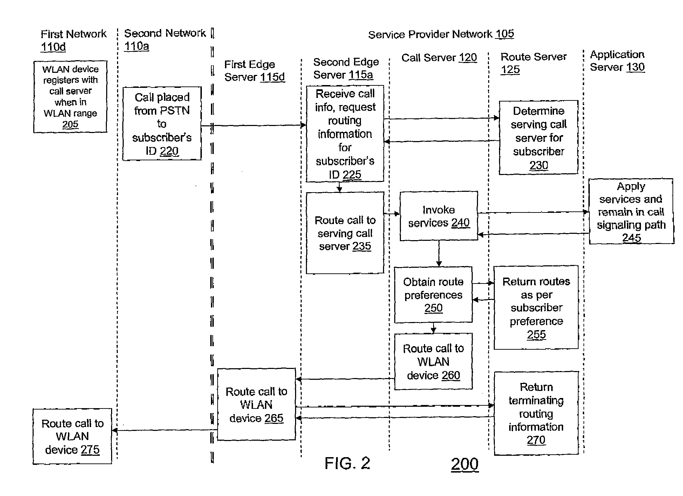

By using the centralized services, "dumb pipe" architecture, the system 100 can provide, for example, common telephony services to all of the subscriber's different devices (e.g., 181, 156, 143), provide a true single phone number for all of the subscriber's different devices, provide intercom services between all of the subscriber's different devices, provide handoff between the subscriber's different devices, and provide other telephony services as described in more detail below using FIGS. 2-10. FIGS. 2-10 illustrate exemplary processes of call management using the elements of the system 100.

FIG. 2 illustrates a process 200 for connecting a call originating from a non-subscriber in the PSTN 110a to a subscriber of the network 105. The subscriber turns on his WLAN mobile device (e.g., the device 143 or the radio 169 of the device 160). The WLAN mobile device registers (205) with the call server 120 when the WLAN device is in range of the WLAN 140. For example, the WLAN device can be preprogrammed with the IP address of the call server 120 or the IP address of the call server can be auto discovered. When the WLAN device communicates with the WLAN 140, the WLAN device is able to route the IP packets across the network 110d, to the edge server 115d, and to the call server 120 using the preprogrammed or auto discovered IP address. In some examples, where there are multiple call servers in the network 105, once a call server is established for a subscriber, any calls to/from that subscriber are processed by that call server while the WLAN device remains registered.

Another caller, a non-subscriber, calls (220) the subscriber's phone number using a phone connected to the PSTN 110a. The non-subscriber can call on a number of devices, such as the black analog phone 180, a cellular phone (e.g., 156a), an IP telephony device, (e.g., a WLAN phone, an IP wireline phone, or a computer), etc. The PSTN 110a determines the number called is associated with the network 105 and routes the call through the appropriate trunk(s) to the edge server 115a. The edge serve 115a receives (225) the incoming call signaling and requests (225) from the route server 125 the routing information for the number called, which belongs to a particular subscriber. The route server 125 determines (230) the call server 120 that is servicing calls for that particular subscriber. For example, the route server 125 can have a lookup table that has the subscriber's identifier (ID) (e.g., the called number) and the IP address of the call server servicing calls for that subscriber. The route server 125 returns the routing information and the edge server 115a routes (235) the signaling information to the indicated call server 120. The call server 120 invokes (240) the services to which the subscriber subscribes by communicating with the application server 130. The application server 130 applies (245) any initial services and remains (245) in the call signaling path, should the need arise to provide any additional services. The application server 130 can determine which services should be applied (245) by, for example, reading the subscriber data in the subscriber database 135. In general, if any of the servers, 115, 120, 125, and 130, need subscriber information, they can communicate with the subscriber database 135 to obtain that information.

The call server 120 obtains (250) the routing preferences of the subscriber by sending a request to the route server 125. In the system 100, each of the subscriber's devices (e.g., his black phone 181c, his cellular phone 156c, and his WLAN phone 143) all have the same phone number assigned to them. So, unlike a follow me service that forwards a call from one device with a particular phone number to another device with a different phone number, the route server 125 determines routes based on the devices. As described in more detail below, using temporary numbers in other networks enables the network 105 to route calls to any of the subscriber's devices without having to give them each different numbers.

To determine the routing preference, the route server 125 uses a preference list entered by the subscriber, or a default routing preference if the subscriber has not entered such a list. For example, in the process 200 the subscriber has previously entered a preference list (e.g., using a data entry interface through a service provider Web page) that indicates the subscriber wants to route calls to his WLAN device first, his cellular device second, and his landline device at home if neither of the other devices are in use. The list can be more sophisticated than a prioritized list of devices. In other examples, the list can be based on the time a call is made and the calling party. So for example, after 7:00 pm, all calls are directed to the landline device at home as the first priority. The subscriber can also set a time when that subscriber does not want to receive any phone calls, e.g., between 11:00 pm and 6:00 am, during which all calls are directed to the voice mailbox. All calls from a spouse can be directed to a cellular device first, where calls from unrecognized calling parties (e.g., phone numbers not in an established contacts list of the subscriber) are always sent to the voice mailbox.

The route server 125 returns (255) the routing information for the devices as dictated by the preference list. The route server 125 can return (255) the routing information for each device individually, waiting for the call server 120 to indicate that the indicated device is not available until returning (255) routing information for the next device on the list. Alternatively, the route server 125 can return (255) the routing information for all of devices, with the preference order indicated. This eliminates the need for the call server 120 to query the route server 125 if a device is not available.

In either case, in the process 200, the call server 120 has registered the WLAN device of the subscriber and can therefore use the routing information for the first preference to route (260) the call to the subscriber's WLAN device. Because the subscriber's WLAN device is in communication with the network 105 via the network 110d and the edge server 115d, the call server 120 sends the call to the edge server 115d. The edge server 115d queries (265) the route server 125 for the terminating routing information. The route server 125 returns (270) the terminating routing information for the call and the edge server 115d generates a media path with edge server 115a and routes the call between the non-subscriber on the PSTN 110a and the subscriber's WLAN device using (275) the network 110d.

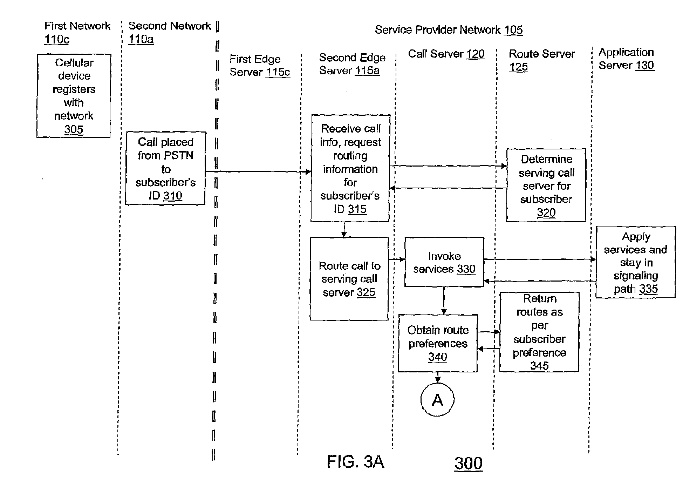

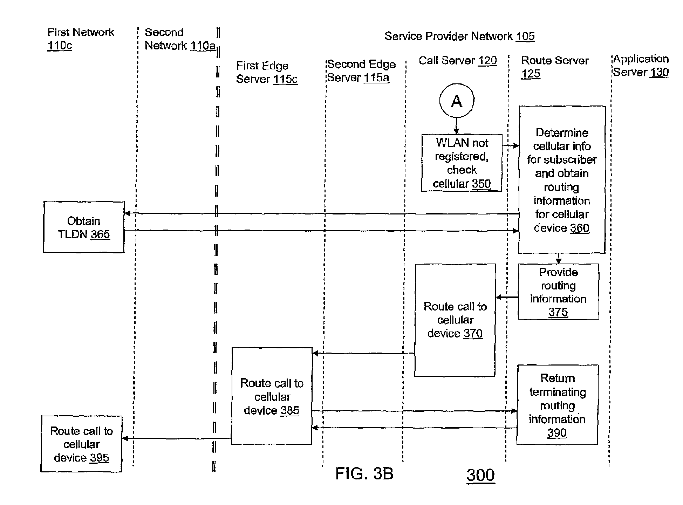

FIG. 3 illustrates a process 300 for connecting a call originating from a non-subscriber in the PSTN 110a to a subscriber of the network 105. The subscriber turns on his cellular mobile device (e.g., the device 156c or the radio 172 of the device 160). The cellular mobile device registers (305) with the cellular network when the cellular device is in range of a RAN (e.g., 153c). For example, the HLR 148b stores the routing information for the MSC (e.g., 150c) servicing the cellular device.

Another caller, a non-subscriber, calls (310) the subscriber's phone number using a phone (e.g., device 180) connected to the PSTN 110a. The PSTN 110a determines the number called is associated with the network 105 and routes the call through the appropriate trunk(s) to the edge server 115a. The edge serve 115a receives (315) the incoming call signaling and requests (315) from the route server 125 the routing information for the number called, which belongs to a particular subscriber. The route server 125 determines (320) the call server 120 that is servicing calls for that particular subscriber. The route server 125 returns the routing information and the edge server 115a routes (325) the signaling information to the indicated call server 120. The call server 120 invokes (330) the services to which the subscriber subscribes by communicating with the application server 130. The application server 130 applies (335) any initial services and remains (335) in the call signaling path, should the need arise to provide any additional services.

The call server 120 obtains (340) the routing preferences of the subscriber by sending a request to the route server 125. To determine the routing preference, the route server 125 uses a preference list entered by the subscriber, or a default routing preference if the subscriber has not entered such a list. For example, in the process 300 the subscriber has previously entered a preference list that indicates the subscriber wants to route calls to his WLAN device first, his cellular device second, and his landline device at home if neither of the other devices are in use. The route server 125 returns (345) the routing information for the devices as dictated by the preference list. In the process 300, the call server 120 has not registered the WLAN device of the subscriber and therefore the call server determines that it cannot use the routing information for the first preference to route the call to the subscriber's WLAN device. Moving to the next preference on the list, the call server then attempts to locate (350) the cellular device of the subscriber by sending a request to the route server 125.

In some examples, all of the phone devices of the subscriber (e.g., his black phone 181c, his cellular phone 156c, and his WLAN phone 143) have the same universal phone number (e.g., 555-555-1234). In some of these examples, all of the communications networks 110a, 110b, 110c, 110d, and 110e are configured to send a phone call to the subscriber's universal phone number (555-555-1234) to the service provider network 105. This advantageously enables network 105 to provide a common set of services for all calls made to/from the subscriber. This also advantageously enables network 105 to send the call to whatever telephony device the subscriber prefers based on his settings. Because all calls are routed to the network 105, however, the network 105 cannot make a call to, for example, the cellular network 110c by simply sending the signaling information to connect a call to the subscriber's universal phone number (e.g., 555-555-1234). If the network 105 did so, the network 110c would simply route the call back to the network 105, as it is configured to do, so the network 105 can provide services. In some of these examples, to overcome this routing, the network 105 obtains a temporary local directory number (TLDN) used by the cellular network and then performs the necessary call signaling using that TLDN.

For example, the route server 125 sends (360) a location request (a LOCREQ in an ANSI-41 environment, a send-routing-information (SRI) request in a GSM network, etc.) to the HLR (e.g., 148b) of the cellular network (e.g., 110c) to obtain (360) the routing information of the subscriber's cellular device (e.g., 156c). The HLR obtains (365) from the serving MSC (e.g., 150c) a TLDN that is temporarily assigned to the cellular device (e.g., 156c) while that cellular device is registered with that serving MSC. The HLR sends (e.g., via the GMSC 145b and the edge server 115c) the TLDN in a location request return response back to the route server 125. The route server 125 sends (375) the TLDN and the routing information to reach the edge server 115c to the call server 120. The call server 120 sends (370) the call to the edge server 115c. The edge server 115c queries (385) the route server 125 for the terminating routing information. The route server 125 returns (390) the terminating routing information for the call and the edge server 115c generates a media path with edge server 115a and routes (385) the call between the non-subscriber on the PSTN 1 10a and the subscriber's cellular device using (395) the network 110c.

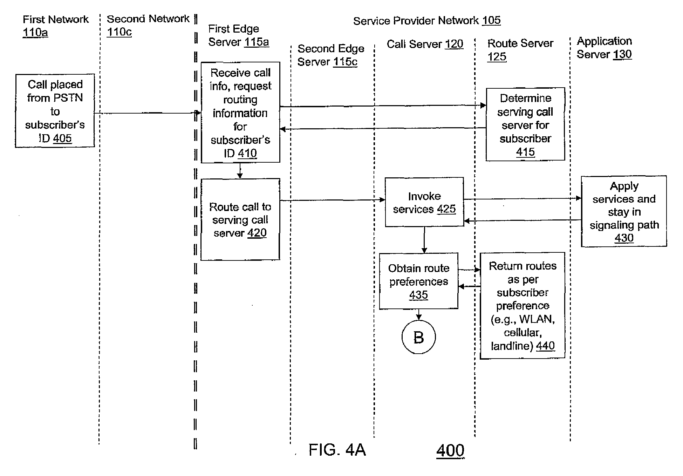

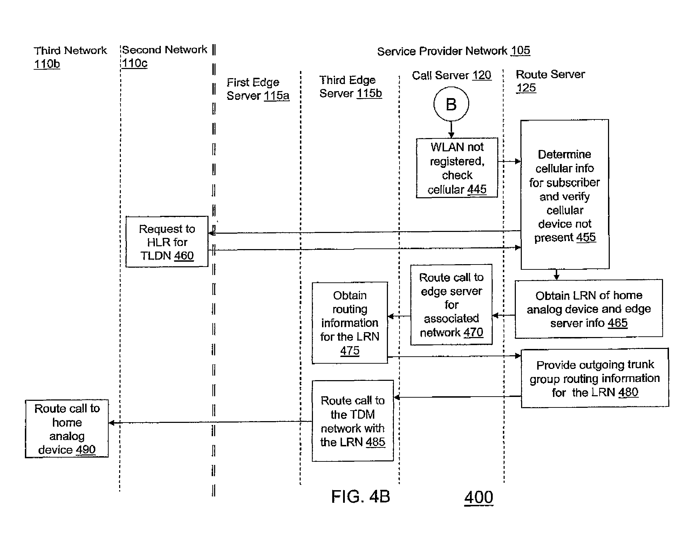

FIG. 4 illustrates a process 400 for connecting a call originating from a non-subscriber in the PSTN 110a to a subscriber of the network 105. In process 400, the subscriber does not have a WLAN device or a cellular device powered on, so neither are registered with any of the communications networks. Another caller, a non-subscriber, calls (405) the subscriber's phone number (e.g., 555-555-1234) using a phone (e.g., device 180) connected to the PSTN 110a. The PSTN 110a determines the number called is associated with the network 105 and routes the call through the appropriate trunk(s) to the edge server 115a. The edge serve 115a receives (410) the incoming call signaling and requests (410) from the route server 125 the routing information for the number called, which belongs to a particular subscriber. The route server 125 determines (415) the call server 120 that is servicing calls for that particular subscriber. The route server 125 returns the routing information and the edge server 115a routes (420) the signaling information to the indicated call server 120. The call server 120 invokes (425) the services to which the subscriber subscribes by communicating with the application server 130. The application server 130 applies (430) any initial services and remains (430) in the call signaling path, should the need arise to provide any additional services.

The call server 120 obtains (435) the routing preferences of the subscriber by sending a request to the route server 125. To determine the routing preference, the route server 125 uses a preference list entered by the subscriber, or a default routing preference if the subscriber has not entered such a list. For example, in the process 400 the subscriber has previously entered a preference list that indicates the subscriber wants to route calls to his WLAN device first, his cellular device second, and his landline device at home if neither of the other devices are in use. The route server 125 returns (440) the routing information for the devices as dictated by the preference list. In the process 400, the call server 120 has not registered the WLAN device of the subscriber and therefore the call server determines that it cannot use the routing information for the first preference to route the call to the subscriber's WLAN device. Moving to the next preference on the list, the call server then attempts to locate (445) the cellular device of the subscriber by sending a request to the route server 125.

The route server 125 sends (455) a location request to the HLR (e.g., 148b) of the cellular network (e.g., 110c) to obtain (455) the routing information of the subscriber's cellular device (e.g., 156c). The HLR returns (460) a location request return response back to the route server 125 indicating that the mobile device is not present on the network 110c. The route server 125 moves to the next device on the preference list and provides (465) the routing information for the subscribers black phone (e.g., 181c). Similar to the cellular device on the network 110c, a call routed using the subscriber's phone number (e.g., 555-555-1234) on the network 110b can result in the phone call being routed back to the network 105. Using the techniques for local number portability (LNP), the route server 105 obtains (465) a location routing number (LRN) for the black phone (181c) indicating the terminating switch (e.g., 178c) that services that device to the call server 120. The call server 120 sends (470) the call information to the edge server 115b. In some examples, the network 105 conforms to a LNP protocol. For example, the called number, which is the subscriber's phone number for all of his devices (e.g., 555-555-1234), is transmitted in the generic address parameter (GAP) digits, since the call is routed using the LRN. The edge server 115b queries (475) the route server 125 for the terminating routing information. The route server 125 returns (480) the terminating routing information for the call and the edge server 115b generates a media path with edge server 115a and routes (485) the call between the non-subscriber on the PSTN 110a and the home analog device using (490) the network 110b.

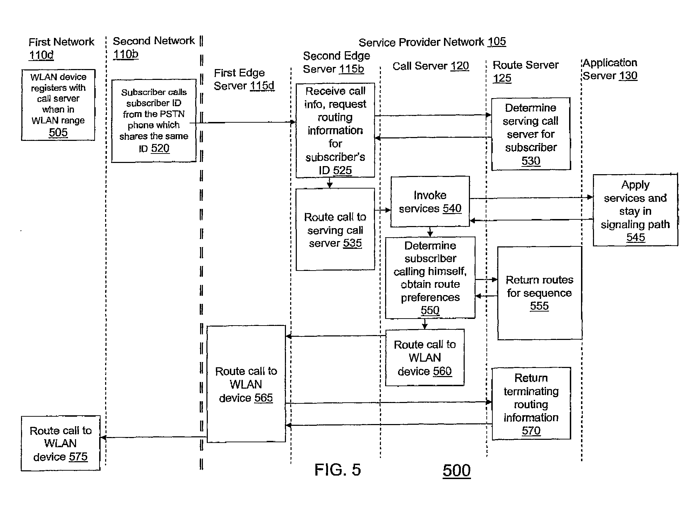

FIG. 5 illustrates a process 500 for connecting a call from a first of the subscriber's devices to a second of the subscriber's devices. This enables the subscriber's devices to act as an intercom system. In process 500, a call originates from the subscribers analog home device (e.g., 181c) and is made to the subscriber's WLAN device (e.g., 143). For example, a child can call her mother by picking up the handset on the home phone and entering some simple key press sequence. For example, the intercom can be set up so certain key press sequences route the call to devices associated with that key press (e.g., *1 calls the WLAN device, *2 calls the cellular device, *3 calls the analog home phone, *4 calls the IP telephony hardware/software of the home computer, etc.). The subscriber turns on her WLAN mobile device (e.g., the device 143 or the radio 169 of the device 160). The WLAN mobile device, which has been assigned the subscriber's universal phone number (e.g., 555-555-1234), registers (505) with the call server 120 when the WLAN device is in range of the WLAN 140. Another caller (e.g., the subscriber's child) calls (520) the subscriber's WLAN device (e.g., by pressing *1) using the analog home phone (e.g., 181 c), which has been also assigned the subscriber's universal phone number (e.g., 555-555-1234).

As described above, the network 110b, to which the analog home phone is connected, is configured to route all of the calls to that subscriber's number through the appropriate trunk(s) to the edge server 115b. The edge serve 115b receives (525) the incoming call signaling and requests (525) from the route server 125 the routing information for the subscriber originating the call. The route server 125 determines (530) the call server 120 that is servicing calls for that particular subscriber (e.g., using the calling number, which is the subscriber's universal number 555-555-1234). The route server 125 returns the routing information and the edge server 115b routes (535) the signaling information to the indicated call server 120. The call server 120 invokes (540) the services to which the subscriber subscribes by communicating with the application server 130. The application server 130 applies (545) any initial services and remains (545) in the call signaling path, should the need arise to provide any additional services. The network 105 determines, using the key press sequence (e.g., *1), that the call is to be routed to the subscriber's WLAN device. In other examples, one key press sequence can be used to indicate an intercom feature is desired, and the network 105 can determine what device(s) to call using the prioritized listing of devices or ring all of the devices at the same time and route the call to the device answered first. In yet other examples, the caller can call the subscriber's universal number (e.g., 555-555-1234) and the network 105 routes the call to one or more device(s) to call using the prioritized listing of devices or rings all of the devices at the same time and routes the call to the device answered first.

The call server 120 obtains (550) the routing information for the WLAN device of the subscriber by sending a request to the route server 125. The route server 125 returns (555) the routing information for the WLAN device. In the process 500, the call server 120 has registered the WLAN device of the subscriber and can therefore use the routing information to route (560) the call to the subscriber's WLAN device. Because the subscriber's WLAN device is in communication with the network 105 via the network 110d and the edge server 115d, the call server 120 sends the call to the edge server 115d. The edge server 115d queries (565) the route server 125 for the terminating routing information. The route server 125 returns (570) the terminating routing information for the call and the edge server 115d generates a media path with edge server 115b and routes (565) the call between the subscriber's analog home device and the subscriber's WLAN device using (575) the network 110d.

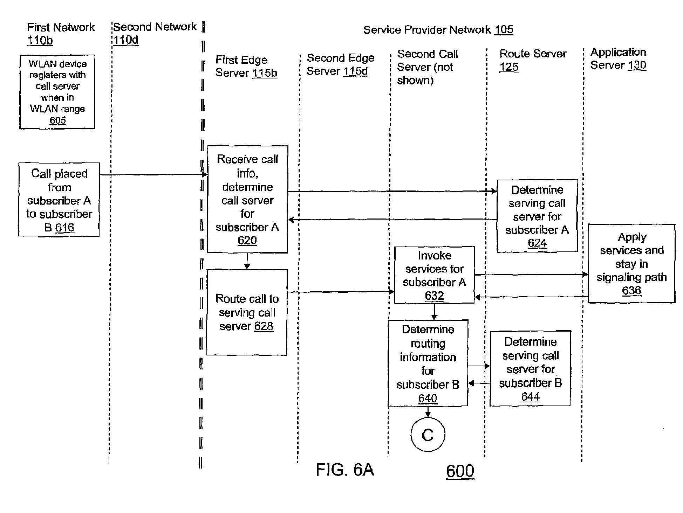

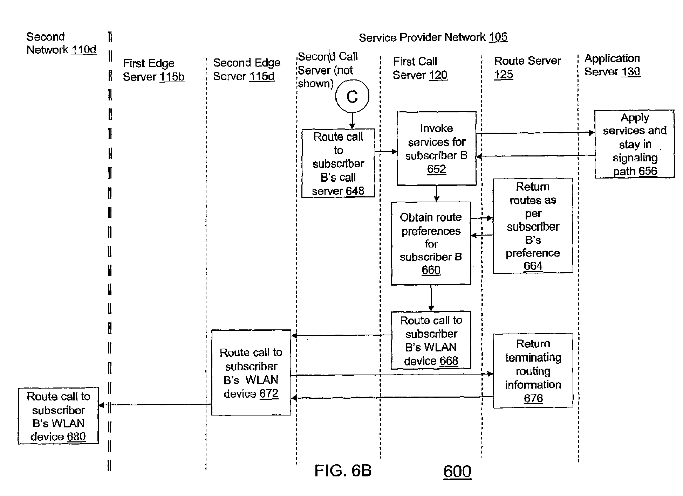

FIG. 6 illustrates a process 600 for connecting a call from a first subscriber (referred to as subscriber A) to a second subscriber (referred to as subscriber B). Subscriber B turns on her WLAN mobile device (e.g., the device 143 or the radio 169 of the device 160). The WLAN device of subscriber B registers (605) with a first call server (e.g., 120) when the WLAN device is in range of the WLAN 140. Subscriber A calls (616) subscriber B's universal phone number using Subscriber A's analog home phone (e.g., 181a). As described above, the network 110b, to which the analog home phone is connected, is configured to route all of the calls from subscribers of network 105 device through the appropriate trunk(s) to the edge server 115b. Because subscriber A is making the call, the call is automatically routed to network 105.

The edge serve 115b receives (620) the incoming call signaling and requests (620) from the route server 125 the routing information for the subscriber originating the call. The route server 125 determines (624) the call server that is servicing calls for subscriber A. The route server 125 returns the routing information and the edge server 115b routes (628) the signaling information to the indicated call server, in this example, a second call server (not shown). The second call server invokes (632) the services to which subscriber A subscribes by communicating with the application server 130. The application server 130 applies (636) any initial services for subscriber A and remains (636) in the call signaling path, should the need arise to provide any additional services for subscriber A.

The second call server determines that the called party is also a subscriber (i.e., subscriber B). The second call server obtains (640) the serving call server for subscriber B by sending a request to the route server 125. In process 600, the serving call server for subscriber B is the first call server 120, with which subscriber B's WLAN device is registered. The second call server routes (648) the call to the first call server 120. The first call server 120 invokes (652) the services to which subscriber B subscribes by communicating with the application server 130. The application server 130 applies (656) any initial services for subscriber B and remains (656) in the call signaling path, should the need arise to provide any additional services for subscriber B. The first call server 120 obtains (660) the routing preferences of subscriber B by sending a request to the route server 125. To determine the routing preference for subscriber B, the route server 125 uses a preference list entered by the subscriber, or a default routing preference if the subscriber has not entered such a list. For example, in the process 600, subscriber B has previously entered a preference list that indicates the subscriber wants to route calls to her WLAN device first, her cellular device second, and her landline device at home if neither of the other devices are in use. The route server 125 returns (664) the routing information for the devices as dictated by the preference list.

In the process 600, the first call server 120 has registered the WLAN device of subscriber B and can therefore use the routing information for the first preference to route (668) the call to the subscriber's WLAN device. Because the subscriber's WLAN device is in communication with the network 105 via the network 110d and the edge server 115d, the first call server 120 sends the call to the edge server 115d. The edge server 115d queries (672) the route server 125 for the terminating routing information. The route server 125 returns (676) the terminating routing information for the call and the edge server 115d generates a media path with edge server 115b and routes (672) the call between the subscriber's analog home device and the subscriber's WLAN device using (680) the network 110d. In other examples, a process similar to the process 700 described below can be employed, using a data channel of a cellular network to route calls.

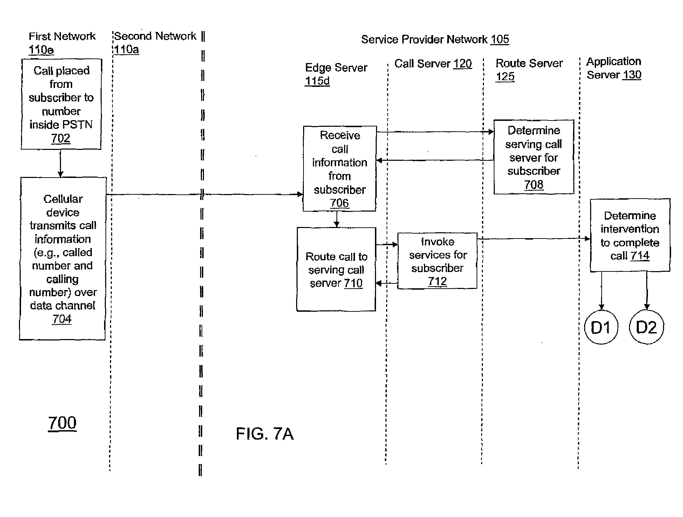

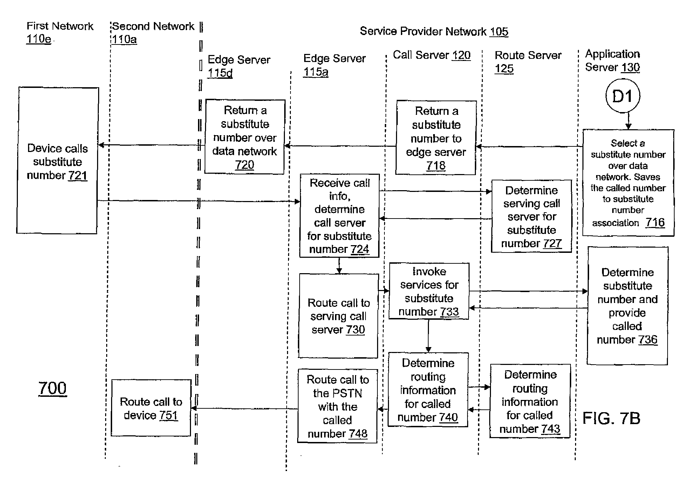

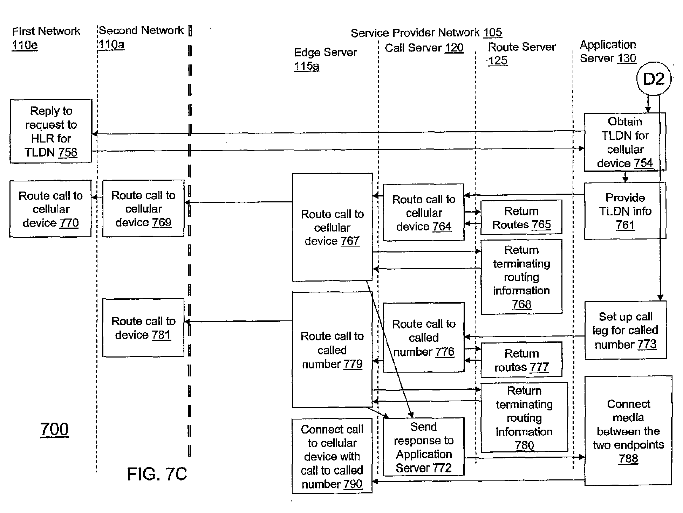

In some of the processes described above, the subscriber places a call on a network that is directly connected to the service provider network 105 via an edge server 115 (e.g., networks 110b, 110c, and 110d). There are scenarios, however, when a subscriber is placing a call using his cellular device (e.g., 156a) on a cellular network (e.g., 110e) that is not directly connected to the service provider network 105. In these scenarios, the subscriber can make a phone call to someone on the PSTN 110a, and the call is routed from network 110e to the PSTN 110a and the call connected to the called party by the PSTN 110a. In such scenarios, the service provider network 105 is not included in the call and the service provider does not provide services. FIG. 7 illustrates a process 700 for incorporating the network 105 into the call in such scenarios so that the network 105 can provide services to the subscriber.

In process 700, a subscriber places (702) a call to a non-subscriber connected to the PSTN 110a by pressing the number using the keypad and pressing "send." Instead of sending the called number to the PSTN 1 10a to connect to the called party, the cellular device (e.g., 156a) uses a data channel of the cellular network 110e to transmit (704) call information to the service provider network 105. The call information includes, for example, the called number and the calling number. If, for example, the cellular network 110e is a GSM network, the data channel can be based on a general packet radio services (GPRS) standard, an enhanced data rates for GSM evolution (EDGE) standard, a universal mobile telecommunications system (UMTS) standard, a wideband code division multiple access (W-CDMA) standard, etc. Similarly, if the cellular network 110e is a CDMA network, the data channel can be based on a 1 times radio transmission technology (1x-RTT) standard, a 1 times evolution - data only (1xEv-DO) standard, a CDMA2000 standard, etc.

In one example, because the data channel is an IP, packet based channel, the system 100 transmits the call information to the network 105 through an IP network, such as the network 110d. The associated edge server 115d receives (706) the call information. Based on the call information (e.g., the calling number included in the data), the network 105 can associate the call information with a particular subscriber. The edge serve 115d requests (706) from the route server 125 the routing information for the subscriber originating the call. The route server 125 determines (708) the call server 120 that is servicing calls for that particular subscriber. The route server 125 returns the routing information and the edge server 115b routes (710) the call information to the indicated call server 120. The call server 120 invokes (712) the services to which the subscriber subscribes by communicating with the application server 130.

The application server 130 applies any initial services and determines (714) the appropriate intervention to complete the call between the subscriber and the called party on the PSTN 110a. Process 700 illustrates two exemplary process paths D1 and D2 that the system 100 can follow to enable the network 105 to be included in the call path to provide services. In the D1 path, the network 105 provides a temporary number so that the PSTN 110a routes the call to the network 105a, and then the network continues routing the call to the called party. In the D2 path, the network 105 calls both the calling party and the called party and then connects the two call legs together.

If the application server 130 follows the D1 process, the application server 130 selects (716) a temporary substitute phone number and stores (716) an association between the called number, from the call information, and the temporary substitute number. The application server 130 transmits the substitute number to the call server 120. The call server 120 transmits the substitute number back to the subscriber's cellular device (e.g., 156a) over a cellular data channel using (720), for example, the edge server 115d corresponding to an IP-based network 110d.

The cellular device receives the substitute number over the data channel and calls (721) the substitute phone number through the cellular network 110e and the PSTN 110a. One characteristic of the temporary substitute phone number is that to the PSTN 110a, the substitute phone number is associated with the network 105. In other words, when the PSTN 110a receives the call signaling from the network 110e to place a call to the substitute phone number, the PSTN 110a routes the call to the edge server 115a of the network 105. The edge serve 115a receives (724) the incoming call signaling and requests (724) from the route server 125 the routing information for the substitute number called. The route server 125 determines (727) the call server 120 that is servicing calls for that particular substitute number. The route server 125 returns the routing information and the edge server 115a routes (730) the call information to the indicated call server 120.

The call server 120 invokes (733) the services for that substitute called number by communicating with the application server 130. The application server 130 determines (736) that this is a substitute phone number that is associated with a particular subscriber (e.g., the calling party) and applies services for that subscriber. The application server 130 also determines (736) that this substitute number is associated with another phone number that the subscriber wants to call (i.e., the number stored (716)). The application server 130 returns the phone number that the subscriber wants to call (i.e., the called number received (706) from the subscriber) to the call server 120.

The call server 120 obtains (740) the route for the phone number that the subscriber wants to call (i.e., the originally called number) by sending a request to the route server 125. The route server 125 finds (743) the routing information for the phone number that the subscriber wants to call and returns the routing information to the call server 120. The call server routes the call through the edge server 115a to route the call to the called party on the PSTN 110a. The PSTN 110a routes (751) the call to the called party, and now the network 105 is involved in the call.

If the application server 130 follows the D2 process, the application server 130 performs processes to call both legs of the desired call. The application server 130 initiates (754) the process to place a call to the subscriber's cellular device (e.g., 156a). The application server 130 sends a request to the HLR 148a of the cellular network 110e to obtain a TLDN for the subscriber's cellular device (e.g., 156a). The cellular network 110e replies (758) to the request and returns a TLDN for the subscriber's cellular device. The application server 130 provides (761) the TLDN information to the call server 120 to set up a call leg with the subscriber's cellular device.

The call server 120 requests (764) the routing information for the TLDN from the route server 125. The route server 125 obtains the routing information and returns (765) that information to the call server 120. The call server 120 routes (764) the call to the edge server 115a, associated with the PSTN 110a, since the network 110e is not directly connected to the network 105. The edge server 115a queries (767) the route server 125 for the terminating routing information. The route server 125 returns (768) the terminating routing information for the call and the edge server 115a routes (767) the call to the subscriber's cellular device using (769) the network 110a to route (770) the call to the indirectly connected network 110e and the subscriber's cellular device. The call server 120 sends (772) a response to the application server 130 that the call leg has been connected.

During, or after the call leg is being established with the subscriber's cellular device, the application server initiates (773) the process to place a call to the phone number that the subscriber wants to call (i.e., the called number received (706) from the subscriber). The application server 130 sends (773) the called phone number to the call server 120 to establish a call leg with the called number. The call server 120 requests (776) the routing information for the called number from the route server 125. The route server 125 obtains the routing information and returns (777) that information to the call server 120. The call server 120 routes (776) the call to the edge server 115a, associated with the PSTN 110a, since the called number is associated with the PSTN 110a.

The edge server 115a queries (779) the route server 125 for the terminating routing information. The route server 125 returns (780) the terminating routing information for the call and the edge server 115a routes (779) the call to the called number using (781) the network 110a. The call server 120 sends (772) a response to the application server 130 that the call leg has been connected. When both legs of the call have been connected, the application server 130 initiates (788) the process to connect the two call legs together. The edge server 115a connects (790) the media paths of the subscriber's cellular device with the called number. By connecting the two legs through the network 105, the network 105 is included in the call and can provide services to the subscriber. Any temporary numbers used in the process 700 are returned back to a "pool" of temporary numbers so that they can be used for any subsequent calls needing the use of a temporary number. It is noteworthy that although the process 700 is described using the network 110e as an example, the process 700 can also be used with directly connected networks, such as 110c.

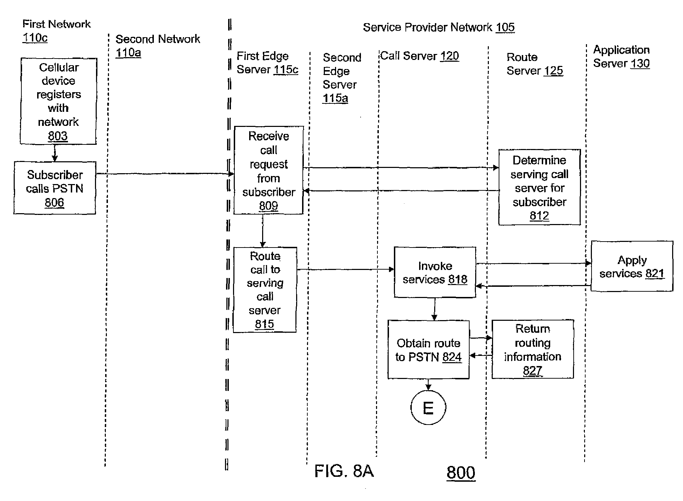

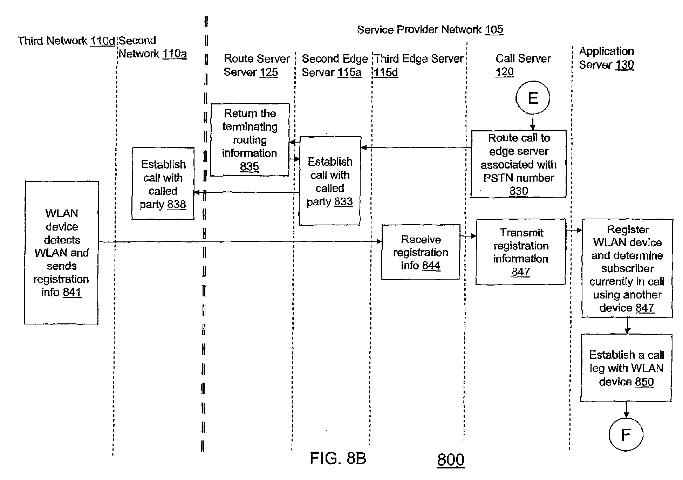

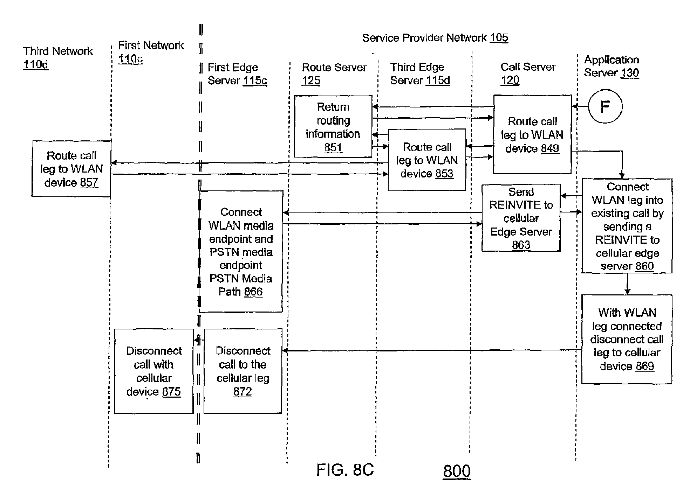

The processes above describe connecting calls involving a subscriber and the subscriber's various devices associated with different networks. In addition to connecting calls with some of the different devices, the network 105 can also handoff calls in process from a first of the subscriber's devices associated with one network to a second of the subscriber's devices associated with another network. FIG. 8 illustrates a process 800 where the network 105 performs a handoff of a call from a subscriber's cellular device being used on a cellular network to the subscriber's WLAN device being used on a WLAN network. In some examples, the cellular device and the WLAN device can be two different physical devices (e.g., 156c and 143). In process 800, they are included in the same physical device (e.g., 169 and 172). Also in process 800, the cellular device (e.g., 169) and the WLAN device (e.g., 172) are both assigned the identical phone number.

The subscriber turns on his mobile device (e.g., device 160). In some examples, to conserve the life of the battery, the device 160 turns on one radio to see if the device is in range of the associated network, and if not in range, turns on the other radio. The device 160 starts with the radio associated with the preferred network. For example, if the WLAN network is preferred, the device 150 first turns on the WLAN radio (e.g., 172). Not being in range of a WLAN network (e.g., 110d), the device turns off the WLAN radio (e.g., 172) and turns on the cellular radio (e.g., 169). Being in range of a RAN (e.g., 153d), the cellular mobile device (e.g., 169) registers (803) with the cellular network (e.g., 110c). Periodically, the device 160 causes the WLAN radio (e.g., 172) to change from a standby to an active mode (e.g., wakes up) to determine if the mobile device 160 has moved in range of a WLAN (e.g., 110d).

With the device 160 in communication and registered with a cellular network (e.g., 110c), the subscriber calls (806) a number in the PSTN 110a. For example, if the device is in communication with the network 110c, the network 110c determines that the call is originating from a subscriber of the network 105 and routes the call to the edge server 115c. As described above, the network 11 0c is configured to route all of the calls to/from that subscriber's number through the appropriate trunk(s) to the edge server 115c (e.g., under an agreement with the operator of the network 105). The edge serve 115c receives (809) the incoming call signaling and requests (809) from the route server 125 the routing information for the subscriber originating the call. The route server 125 determines (812) the call server 120 that is servicing calls for that particular subscriber. The route server 125 returns the routing information and the edge server 115c routes (815) the signaling information to the indicated call server 120. The call server 120 invokes (818) the services to which the subscriber subscribes by communicating with the application server 130. The application server 130 applies (821) any initial services and remains (821) in the call signaling path, should the need arise to provide any additional services.

The call server 120 requests (824) the routing information for the called number from the route server 125. The route server 125 obtains the routing information and returns (827) that information to the call server 120. The call server 120 routes (830) the call to the edge server 115a, associated with the PSTN 1 10a, since the called number is associated with the PSTN 110a. The edge server 115a queries (883) the route server 125 for the terminating routing information. The route server 125 returns (835) the terminating routing information for the call and the edge server 115a routes (833) the call to the called number using (838) the network 110a.

During one of its periodic checks, the device 160 turns on the WLAN radio (e.g., 172) and the WLAN radio detects (841) a WLAN (e.g., 140) within range. The WLAN device sends (841) registration information across the WLAN. The edge server (e.g., 115d) corresponding to the WLAN receives (844) the registration information and transmits that information to the call server 120. The call server 120 transmits (847) the information to the application server 130. The application server 130 determines (847) that the subscriber with whom the WLAN device is associated is already in a call. The application server 130 initiates (850) the processing to establish a call leg with the WLAN device. It is worth noting that although the call in process is with the same physical device, the call is currently going through the cellular network 110c and through the first radio 169. When a call leg is established with the WLAN device, that call leg goes through the IP network 110d and through the second radio 172.

The application server 130 instructs (850) the call server to establish a call leg with the WLAN device (e.g., 172). The call server 120 requests (849) the routing information for the WLAN device from the route server 125. The route server 125 obtains the routing information and returns (851) that information to the call server 120, The call server 120 routes (849) the call to the edge server 115d, which is the edge server associated with the IP network 110d. The edge server 115d queries (853) the route server 125 for the terminating routing information. The route server 125 returns (851) the terminating routing information for the call and the edge server 115d routes (853) the call to the called number using (857) the network 110d.

With a call leg established with the WLAN device, the application server 130 initiates (860) the process to add the WLAN leg into the existing call with the subscriber. For example, a SIP "REINVITE" command can be used. The call server 120 sends (863) the SIP "REINVITE" command to the edge server 115c serving the cellular network 110c. The edge server 115c connects the media path of the call in process with the edge server 115d serving the WLAN network 110d. With the WLAN leg now connected into the media path, the application server 130 initiates (869) the process to remove the call leg going to the cellular device. The edge server 115c disconnects (872) the call leg going to the cellular device (e.g., 169), eliminating (875) the call path in the cellular network 110c. In this example, the edge server 115c remains in the media path throughout the call. This enables, for example, law officials that may have set up a wire tap to remain in the call after the call is handed off from the cellular device to the WLAN device. In some examples, the media path through the edge server 115c can be eliminated, so that there is a direct media path from the edge server 115a serving the PSTN 110a and the edge server 115d serving the WLAN IP network 110d.

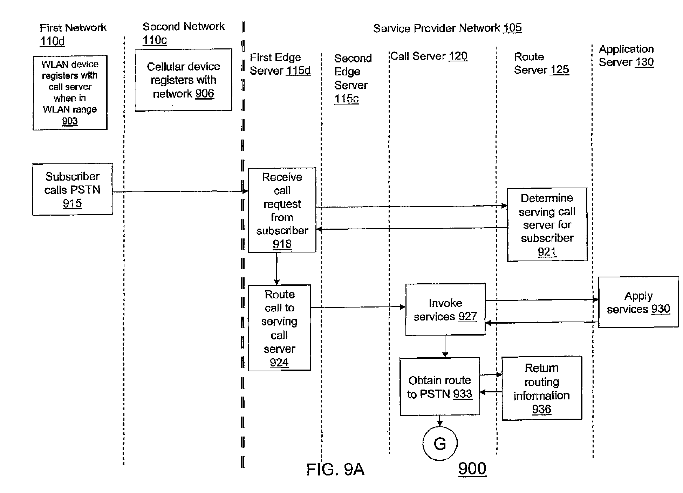

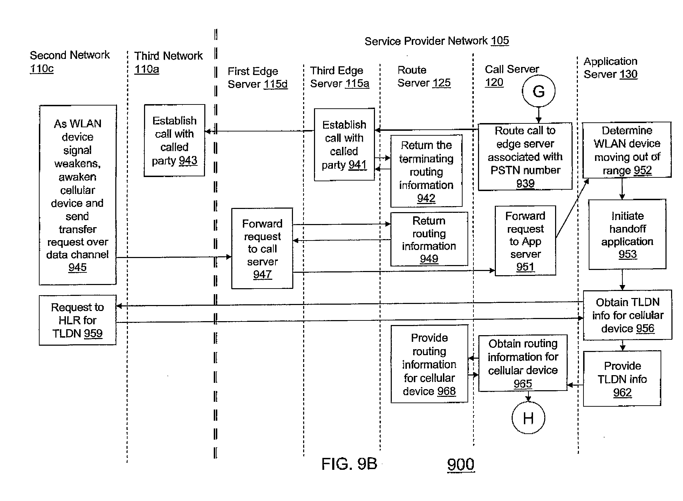

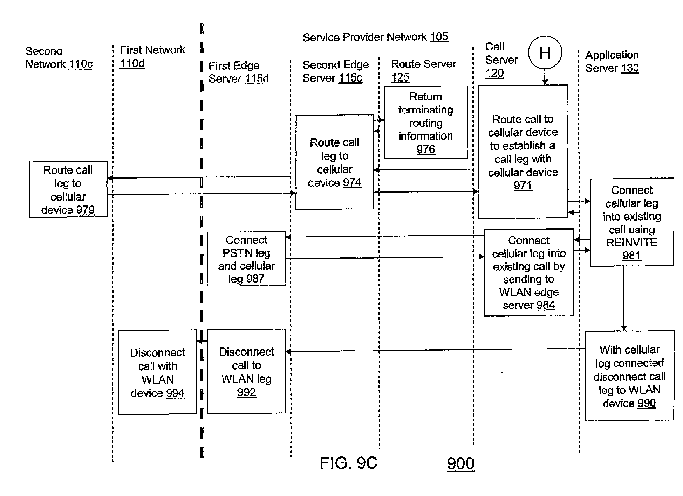

FIG. 9 illustrates an exemplary handoff process 900 where a call in process is transferred from a subscriber's WLAN device (e.g., 172) to a subscriber's cellular device (e.g., 169). The WLAN device detects (903) that the device is within range of a WLAN (e.g., 140) and registers (903) the WLAN device. Similarly, the cellular device detects (906) that the device is within range of a cellular network RAN (e.g., 110d) and registers (906) the cellular device. As described above, the device 160 can be programmed to conserve battery power by only using the preferred radio when in range of a compatible network. In some examples, if the WLAN device is preferred, then the cellular device is left off until the device 160 detects that the signal to the WLAN device is weakening and a switch to the cellular network will be needed. In some examples, the voice channel of the cellular network is not established when a WLAN connection is present, but a data channel with the cellular network is established, so that messages can be sent across the data channel as described below.

With the device 160 in communication and registered with a WLAN network (e.g., 110d), the subscriber calls (915) a number in the PSTN 110a. When making calls on an IP network, the packets are routed to the edge server 115d using, for example, IP addressing. The edge serve 115d receives (918) the incoming call signaling and requests (918) from the route server 125 the routing information for the subscriber originating the call. The route server 125 determines (921) the call server 120 that is servicing calls for that particular subscriber. The route server 125 returns the routing information and the edge server 115d routes (924) the signaling information to the indicated call server 120. The call server 120 invokes (927) the services to which the subscriber subscribes by communicating with the application server 130. The application server 130 applies (930) any initial services and remains (930) in the call signaling path, should the need arise to provide any additional services.

The call server 120 requests (933) the routing information for the called number from the route server 125. The route server 125 obtains the routing information and returns (936) that information to the call server 120. The call server 120 routes (939) the call to the edge server 115a, associated with the PSTN 110a, since the called number is associated with the PSTN 110a. The edge server 115a queries (941) the route server 125 for the terminating routing information, The route server 125 returns (942) the terminating routing information for the call and the edge server 115a routes (942) the call to the called number using (943) the network 110a.

Some time during the call, the device 160 determines (945) that the WLAN signal is weakening and awakens (945) the cellular device (e.g., 169). In one example, the device 160 monitors the signal strength of the communication signals with the WLAN and if the signal strength drops below a predetermined threshold, the device 160 turns on the cellular device. If a call is in process, this wake up task is performed faster and earlier than if the device is in standby mode. In process 900, when the device 160 determines that a loss of communication with the WLAN is possible and a call is in progress, the device 160 transmits (945) a transfer request over the data channel (e.g., conforming to a GPRS standard) of a cellular network (e.g., GSM). In some examples, because the transfer request is data, the request travels from the cellular network (e.g., 110c) to an IP-based network (e.g., 110d) and arrives at the network through edge server 115d.

The edge serve 115d receives (947) the incoming transfer request and queries (947) the route server 125 for the routing information for the call server serving the subscriber from whose device the request is sent. The route server 125 determines (949) the call server 120 that is servicing the call for that particular subscriber. The route server 125 returns the routing information and the edge server 115d routes (947) the transfer request to the indicated call server 120. The call server 120 forwards (951) the transfer request to the application server 130. The application server 130 determines (952) that with a call in process, the request indicates that the WLAN device is moving out of range and that a handoffto the cellular device is needed.

The application server 130 initiates (953) a handoff application to transfer the call in process from the WLAN device (e.g., 172) to the cellular device (e.g., 169). The application server 130 sends (956) a request to the HLR (e.g., 148a) of the cellular network 110c to obtain a TLDN for the subscriber's cellular device (e.g., 169). The cellular network 110c replies (959) to the request and returns a TLDN for the subscriber's cellular device. The application server 130 provides (962) the TLDN information to the call server 120 to set up a call leg with the subscriber's cellular device.

The call server 120 requests (965) the routing information for the TLDN from the route server 125. The route server 125 obtains the routing information and returns (968) that information to the call server 120. The call server 120 routes (971) the call to the edge server 115c, associated with the cellular network to establish a call leg with the cellular device. The edge server 115a queries (974) the route server 125 for the terminating routing information. The route server 125 returns (976) the terminating routing information for the call and the edge server 115c routes (974) the call to the subscriber's cellular device using (979) the network 110c. The call server 120 sends (971) a response to the application server 130 that the call leg has been connected.

With a call leg established with the cellular device, the application server 130 initiates (981) the process to add the cellular leg into the existing call with the subscriber. For example, a SIP "REINVITE" command can be used. The call server 120 sends (984) the call leg established with the edge server 115c serving the cellular network 110c to the edge server 115d managing the call leg with the WLAN device. The edge server 115d connects (987) the media path of the call in process with the edge server 115c serving the cellular network 110c. With the cellular leg now connected into the media path, the application server 130 initiates (990) the process to remove the call leg going to the WLAN device. The edge server 115d disconnects (992) the call leg going to the cellular device (e.g., 172), eliminating (994) the call path in the WLAN 140. Similar to the exemplary process 800, in this example, the edge server 115d remains in the media path throughout the call depending on preferences and/or regulations. In some examples, the media path through the edge server 115d can be eliminated, so that there is a direct media path from the edge server 115a serving the PSTN 110a and the edge server 115c serving the cellular network 110c.

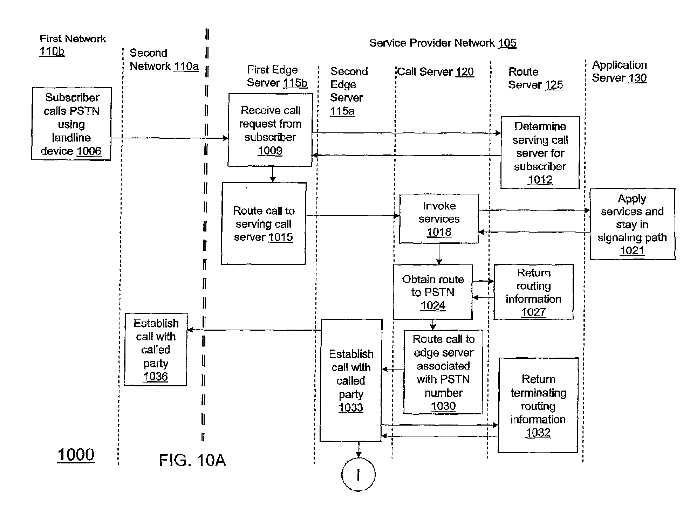

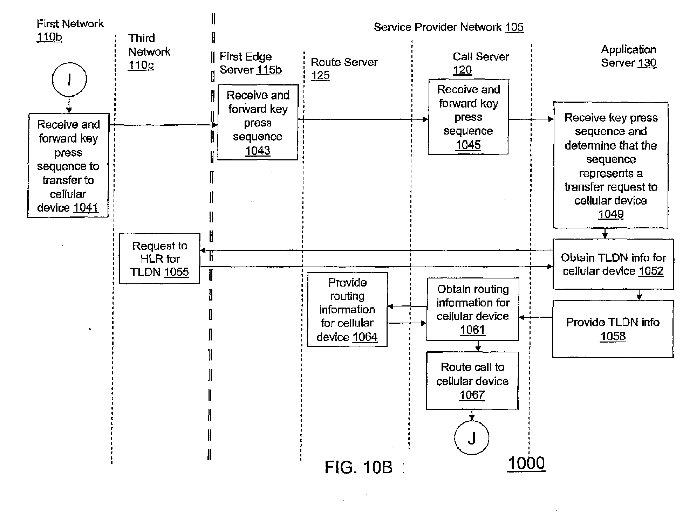

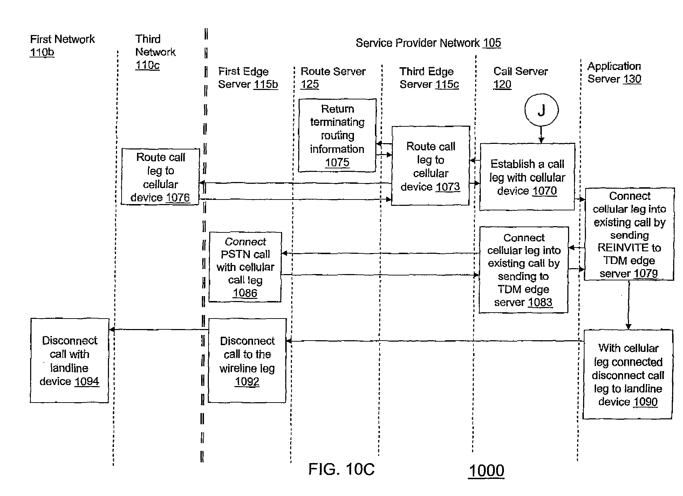

In the handoff processes 800 and 900, when the WLAN device and the cellular device are in the same physical device, (e.g., 169 and 172 of device 160), the processing element 175 can manage the coordinating of sending the voice data to a common speaker of the device 160. In such a scenario, the user does not notice that the phone call was switched from one radio and associated network to another radio and associated network. The same physical device is not, however, a requirement for the handoff procedures. Because the network 105 manages calls for all of the subscriber's devices, the network 105 can handoff from any device to any other device. When there are two physical devices, the subscriber might hang up one device and start talking on the other, thereby noticing that the call has been transferred. FIG. 10 illustrates an exemplary process 1000 where the network 105 performs a haridoff of a call in process from a landline device (e.g., 181a) of a subscriber to a mobile cellular device (e.g., 156c) of the subscriber.

The subscriber calls (1006) a number in the PSTN 110a using his landline phone (e.g., 181a). When making calls on the network 110b, the calls can be directly routed to the edge server 115b. The edge serve 115b receives (1009) the incoming call signaling and requests (1009) from the route server 125 the routing information for the subscriber originating the call. The route server 125 determines (1012) the call server 120 that is servicing calls for that particular subscriber. The route server 125 returns the routing information and the edge server 115b routes (1015) the signaling information to the indicated call server 120. The call server 120 invokes (1018) the services to which the subscriber subscribes by communicating with the application server 130. The application server 130 applies (1021) any initial services and remains (1021) in the call signaling path, should the need arise to provide any additional services.

The call server 120 requests (1024) the routing information for the called number from the route server 125. The route server 125 obtains the routing information and returns (1027) that information to the call server 120. The call server 120 routes (1030) the call to the edge server 115a, associated with the PSTN 110a, since the called number is associated with the PSTN 110a. The edge server 115a queries (1033) the route server 125 for the terminating routing information. The route server 125 returns (1032) the terminating routing information for the call and the edge server 115a routes (1033) the call to the called number using (1036) the network 110a.

Some time during the call, the subscriber indicates (1041) to the network 105 that the subscriber wants to transfer the call from the analog landline device (e.g., 181a) to the subscriber's cellular device (e.g., 156c). The subscriber can indicate this request to transfer by, for example, punching a specific sequence of numbers during the call (e.g., *12). Because the network 110b is not servicing the subscriber, the network 110b does not detect or act on the key press sequence (e.g., the DTMF tones). Instead, the key press sequence is typically forwarded (1041) as part of the call (e.g., as part of the voice signal component) to the edge server 115b of the network 105. The edge server 115b forwards (1041) the sequence to the call server 120 and the call server 120 forwards (1045) the sequence to the application server 130. This can also be done, for example, using a SIP "INFO" message.

The application server 130 receives (1049) the key press sequence and determines (1049) that this particular sequence (e.g., *12) represents a request to transfer the call in process to the subscriber's cellular device. The application server 130 initiates (1049) a handoff application to transfer the call in process from the landline device (e.g., 181a) to the cellular device (e.g., 156c). The application server 130 sends (1052) a request to the HLR (e.g., 148a) of the cellular network 110c to obtain a TLDN for the subscriber's cellular device (e.g., 156c). The cellular network 110c replies (1055) to the request and returns a TLDN for the subscriber's cellular device. The application server 130 provides (1058) the TLDN information to the call server 120 to set up a call leg with the subscriber's cellular device.

The call server 120 requests (1061) the routing information for the TLDN from the route server 125. The route server 125 obtains the routing information and returns (1064) that information to the call server 120. The call server 120 routes (1067) the call to the edge server 115c, associated with the cellular network to establish (1070) a call leg with the cellular device. The edge server 115a queries (1073) the route server 125 for the terminating routing information. The route server 125 returns (1075) the terminating routing information for the call and the edge server 115c routes (1073) the call to the subscriber's cellular device using (1076) the network 110c. The call server 120 sends (1070) a response to the application server 130 that the call leg has been connected.

With a call leg established with the cellular device, the application server 130 initiates (1079) the process to add the cellular leg into the existing call with the subscriber. For example, a SIP "REINVITE" command can be used. The call server 120 sends (1083) the call leg established with the edge server 115c serving the cellular network 110c to the edge server 115b managing the call leg with the landline device. The edge server 115b connects (1086) the media path ofthe call in process with the edge server 115c serving the cellular network 110c. With the cellular leg now connected into the media path, the application server 130 initiates (1090) the process to remove the call leg going to the landline device. The edge server 115b disconnects (1092) the call leg going to the cellular device (e.g., 181a), eliminating (1094) the call path in the network 110b. Similar to the exemplary processes 800 and 900, in some examples, the media path through the edge server 115b can be eliminated, so that there is a direct media path from the edge server 115a serving the PSTN 110a and the edge server 115c serving the cellular network 110c. In other examples, the edge server 115d remains in the media path throughout the call depending on preferences and/or regulations.

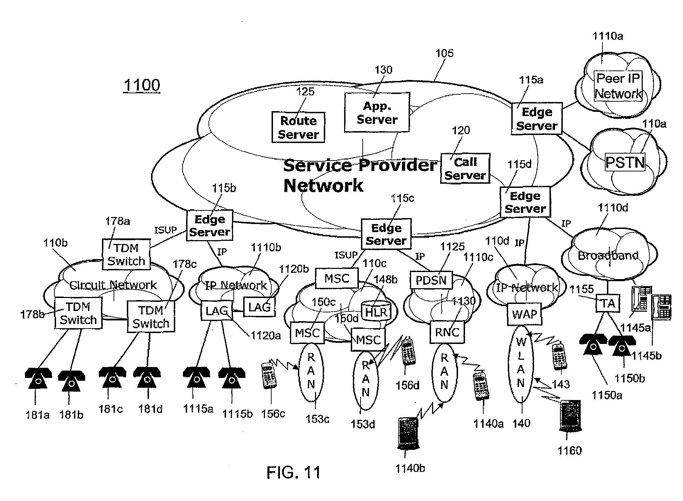

FIG. 11 illustrates another exemplary system 1100 that includes other types of communication networks on which telephony can be incorporated. Similar to the processes described above, these other networks also serve as "dumb pipes" between the service provider network 105 and the subscriber's devices associated with the different networks. This enables the service provider network 105 to manage and direct calls to preferred devices over preferred networks and perform handoffs from one device to another device during a call. In the system 1100, the edge servers 115a, 115b, 115c, and 115d serve as an interface to networks 1110a, 110b, 1110c, and 1110d as alternatives or in addition to the networks 110a, 110b 110c, and 110d.

The network 1110a is a peer IP network. The peer IP network 1110a can be, for example, another service provider network or the more general IP Internet network. The network 1110b is an IP network to which analog black phones 1115a and 1115b are connected via a line access gateway (LAG) 1120a. The network 1110c is a cellular network that includes a packet data serving node (PDSN) 1125 and a radio network controller (RNC) 1130 associated with a RAN 1135. The system 1100 shows mobile devices 1140a (e.g., a phone) and 1140b (e.g., a PDA) in communication with the RAN 1135. The networks 110c and 1110c can be, for example, 2G, 2.5G and/or 3G cellular networks. The network 110d represents a broadband IP network (e.g., a network implemented by a cable company) to which IP phones 1145a and 1145b are connected. Analog black phones 1150a and 1150b are also connected to the broadband IP network 1110d via a terminal adapter (TA) 1155. A PDA 1160 is in communication with the WLAN 140.

The common telephony services that the network 105 can offer are extensive and varied. As described above, the application server 130 can stay in the call path for all of the call and apply these services as applicable. What follows is a description of examples of some telephony services that network 105 can provide. These examples are illustrative, but not meant to limit the scope of possible services that the network 105 can provide. For example, the services can include providing a telephone portal, providing a Web portal (e.g., using APIs), providing a "Find Me" service (e.g., using parallel ringing), providing a device handoff feature, enabling hyperlink dialing, generating and storing call logs, enabling hyperlink recording, providing customized routing preferences to the subscriber's devices, including to the subscriber's voice mail at certain times, enabling multiple party calling, enabling shortcut dialing, enabling multiparty "meet-me conferencing, providing integration with email, calendar and contacts databases, providing a parental control feature, providing a "Buddy list" integration, providing screen pop integration, enabling prepaid calling, enabling call center application, providing blocking (e.g., because of a high fraud country, a particular country/area code, premium numbers, intemational/operator/DA/other call types, black list/white list call control, etc.), providing screening, providing number translation, providing a voice VPN, providing customized ringback tones, etc.

Some of these services that are provided are traditional local services that a subscriber is accustomed to receiving. For example, a caller ID with name feature allows the subscriber to view a caller's name and number before answering a call, if the calling party number is coded as "presentation allowed." With this feature, as well as some others, a separate caller ID display unit or phone with built in display unit is required to use this feature. A per-call caller ID blocking feature, which is activated by dialing a code sequence (e.g., *67) before dialing a number, prevents the caller's name and phone number from being displayed to the person currently being called (and for this one call only). If the called party has a caller ID feature and a suitable display device, the called party will only see the word "Private" or "Anonymous." The result of this dialing prefix is for the originating call setup message (e.g., SS7 IAM for an off-net call) to be marked "presentation restricted."

A call waiting feature is provided when the subscriber is on the phone with another (second) party. Typically, an audible call waiting tone indicates to the subscriber that a third party is attempting to call. For example, the call waiting tone can be supplied twice at 10-second intervals. The party originating the new call to the subscriber hears only audible ringing; the second party hears nothing. Call waiting also can include a hold feature that is activated by a switch-hook flash. Subscribers can alternate between the two parties with consecutive flashes. If the subscriber hangs up while one party is still on hold, the subscriber's phone automatically rings and, upon answer, the subscriber is re-connected to the held party. A cancel call waiting feature (e.g., temporarily disable) can be invoked at any time before a call. To invoke, the subscriber picks up the receiver and listens for dial tone, then presses a key sequence (e.g., *70) and waits for a second dial tone to make the call. The call waiting feature is reactivated once the call is completed or the subscriber hangs up. A caller ID with call waiting feature is a combination of the call waiting feature with the caller ID feature. When the subscriber is on the phone, an audible call waiting tone indicates that another party is attempting to call. The calling number (along with the month, day, and time of the call) are also transmitted to the caller ID display unit or phone.

A N-way calling feature allows a subscriber to talk with two or more people at different numbers at the same time, thereby establishing a N-way conference call. The subscriber can also place one party on hold, talk privately to another, and then return to the original N-way call. The feature uses the bridge in the media edge servers (e.g., 115), and is activated, for example, through the use of a switch-hook flash during a call. An automatic recall feature allows the subscriber to initiate a call to the last received calling party number by dialing a sequence of keys (e.g., *69). If the number is busy when dialing *69, a call can be set up when the line becomes free. At that time, the phone will ring with a special series of ring tones and when the subscriber lifts the handset, the call will be connected. An automatic redial feature can be invoked when a number a subscriber calls is busy. To invoke, the subscriber can dial a sequence of keys (e.g., *66) and the network (e.g., 105) monitors the original line until it is no longer busy, and when it is no longer busy, the subscriber's phone will ring with a special series of ring tones. When the subscriber lifts the handset, the call will be connected.

The network 105 can provide a voice portal feature that provides subscribers a telephone user interface to control their services (e.g., as an alternative to the Web portal feature below). The voice portal feature serves as a voice activated interface that allows a subscriber to retrieve voicemail for the voice mailbox associated with the network 105, return calls to callers who left voicemail (e.g., if a return calling number is available), change the outgoing message for voicemail, change the device preference list (e.g., order of device and times), call a shortcut dial number, etc. The voice portal can be invoked, for example, by dialing a shortcut code (e.g., *234) from one of the subscriber's devices. Or, the subscriber can configure an auto-login capability so that the voice portal is reached every time the subscriber uses one of his devices.

Similar to the voice portal feature, the network 105 can also provide a Web portal feature that provides a Web-based graphical user interface that allows new customers to sign up for service, and existing customers to provision administrative options for various features such as establish/update the routing preference list for the subscriber's devices, set the number of rings before the call is routed to another of the subscriber's devices, define shortcut dial numbers, and record outgoing announcements. The Web portal feature can also be used to retrieve voicemail, return calls to callers who left voicemail (e.g., if a return calling number is available) using a hyperlink to dial, change the outgoing message for voicemail using a hyperlink to record, activating/de-activating/configuring a "Find Me" ringing service, call any shortcut dial number, view call logs, etc. The Web portal feature can be reached by subscribers by entering a designated URL into any web browser connected to the Internet.

In the processes described above, the network 105 uses a routing preference list to direct calls sequentially to devices in the order of the list or a default order. In other examples, the network 105 can provide a "Find Me" feature allows the subscriber's multiple devices to be alerted through parallel ringing. For example, the subscriber can use the Web portal to specify which of his devices should be alerted when a call is placed to the subscriber's number. The designated end devices will be alerted by the network 105 simultaneously attempting to establish call legs with each of the user's devices using processes similar to those described above. In one example, when a call is answered at any one of the devices, that device must confirm acceptance of the call. This can involve, for example, playing an announcement when the device is answered, stating "there is an incoming call for [subscriber name]. Press 1 to accept the call." When an end-user at the answering location presses the '1' key on the keypad to confirm acceptance of the call, the caller is connected to the call, and alerting is stopped at all other locations. If none of the alerted locations answer or accept the call, the caller is connected to the subscriber's voicemail that has been established with the network 105.

In some examples, all calls that a subscriber places or receives are logged with the following information: a timestamp, the consumer VoIP subscriber's name, and the calling and called telephone numbers. While viewing the call log on, for example, the Web portal, the subscriber can click an icon (i.e., hyperlink) for each phone number in the call log, which links the subscriber to the web site anywho.com to retrieve more information about the number. Similarly, the hyperlink to dial feature is available on the call log, by clicking on a special click-to-dial link associated with each phone number in the log. If an incoming call was sent to voicemail, a hyperlink is displayed for that call. Clicking on the hyperlink plays the corresponding voicemail message (if any) via the user's preferred media player.

In some examples, the subscribers can use the Web portal to provision shortcut-dial numbers and associated labels. These numbers can be called via one of three methods: Click-to-Dial (via the Web Portal), via the Voice Portal, or directly from their handset, by dialing some sequence of keys (e.g., *13 and the reference digits of the shortcut dial phone number).

The personal conferencing feature allows subscribers to schedule a conference call for multiple participants, using a web interface. The subscriber may schedule a conference to begin immediately or at some time in the future, and specifies the duration of the conference. The application server 130 assigns a conference bridge (dial-in) number and PIN code, which the subscriber can distribute to the conference participants. The PIN code will be active only during the scheduled conference time. Participants dial into the conference bridge number and are prompted to enter the PIN code. If the conference is active, the caller will be connected to a bridging media server in the network 105, and joined with other callers on the same conference. In other examples, the subscriber can enter the phone numbers of all of the participants for the conference. Then at the scheduled time, the network 105 initiates the calls to all of the participants in the list. Personal conferencing differs from N-way calling in how the users are joined. In N-way calling, the subscriber uses switch-hook flash and dials each new participant. In personal conferencing, the participants each dial in independently, and are joined together by the application server based on the conference PIN code, or the network 105 dials and connects the callers automatically. Personal conferencing can also provide a number of other features, such as join and leave tones, mute/un-mute from any phone, conference expiration, automatically dropping all participants, configurable limits on number of participants per call, maximum duration, etc., detection of invalid or inactive PIN codes, playing of appropriate announcements, etc.

The voice mail feature provides a universal call answering capability in the event that the subscriber's end devices are busy or do not answer after a user-configurable timeout (e.g., in ring cycles). The subscriber can use the Web portal to configure the service. The subscriber can choose from three types of outgoing message, such as a pre-recorded system greeting, a text-to-speech rendering of the subscriber's name, or a personalized message recorded by the subscriber. The subscriber also specifies general disposition for all incoming voice mail messages. The subscriber can choose to have the messages stored on the voicemail message store, sent as an email attachment to an email address, or both. In addition, the subscriber can specify an email address to alert when a voice mail message has been received. When a subscriber uses the Web portal to view his or her voice mail, the subscriber can choose to forward a particular piece of voice mail to an email address of the subscriber's choosing.

Also, the voice mail system will activate/deactivate the message waiting indicator light on any of the so equipped subscriber's telephone devices (or a separate message waiting indicator device near a phone) and/or play a stutter dial tone or a specific message (e.g., you have a message waiting) to the subscriber when the subscriber picks up the handset to indicate a voice mail is waiting. This message waiting indication can be accomplished, for example, via a SIP Notify message. Voice mail messages stored on the voicemail message store can be retrieved, saved, and deleted via DTMF or website access. In addition to accessing voicemail from the voicemail pages of the web portal, subscribers may also access voice mail from their call logs. On the voice mail pages of the Web portal, the telephone number of the caller who left the voice mail is displayed along with the hyperlink representing the voice mail message received. The subscriber may use the hyperlink to call the telephone number of the caller who left the voice mail.

It is noteworthy that in the examples described herein, a phone number is used to direct a call and to identify the subscriber's devices. Where signaling protocols and telephony devices allow, alphanumeric strings can be used to direct calls and identify the subscriber's devices. For example, a uniform resource locator (URL) can be used as an alternative to a phone number to uniquely identify the user to which a call should be directed. In such cases, the identical URL is assigned to the each of the subscriber's devices.

The above-described techniques can be implemented in digital electronic circuitry, or in computer hardware, firmware, software, or in combinations of them. The implementation can be as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps can be performed by one or more programmable processors executing a computer program to perform functions of the invention by operating on input data and generating output. Method steps can also be performed by, and apparatus can be implemented as, special purpose logic circuitry, e.g., an FPGA (field programmable gate array) or an ASIC (application-specific integrated circuit). Modules can refer to portions of the computer program and/or the processor/special circuitry that implements that functionality.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Data transmission and instructions can also occur over a communications network. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

The terms "module" and "function," as used herein, mean, but are not limited to, a software or hardware component which performs certain tasks. A module may advantageously be configured to reside on addressable storage medium and configured to execute on one or more processors. A module may be fully or partially implemented with a general purpose integrated circuit (IC), FPGA, or ASIC. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. Additionally, the components and modules may advantageously be implemented on many different platforms, including computers, computer servers, data communications infrastructure equipment such as application-enabled switches or routers, or telecommunications infrastructure equipment, such as public or private telephone switches or private branch exchanges (PBX). In any of these cases, implementation may be achieved either by writing applications that are native to the chosen platform, or by interfacing the platform to one or more external application engines.

To provide for interaction with a user, the above described techniques can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer (e.g., interact with a user interface element). Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The above described techniques can be implemented in a distributed computing system that includes a back-end component, *e.g.,* as a data server, and/or a middleware component, *e.g.,* an application server, and/or a front-end component, e.g., a client computer having a graphical user interface and/or a Web browser through which a user can interact with an example implementation, or any combination of such back-end, middleware, or front-end components. The components of the system can be interconnected by any form or medium of digital data communications, e.g., a communications network. Examples of communications networks include a local area network ("LAN") and a wide area network ("WAN"), e.g., the Internet, and include both wired and wireless networks. Communications networks can also all or a portion of the PSTN, for example, a portion owned by a specific carrier.

The computing system can include clients and servers. A client and server are generally remote from each other and typically interact through a communications network. The relationship of client and server arises by virtue of computer programs running on the respective computers and having a client-server relationship to each other.

The invention has been described in terms of particular embodiments. The alternatives described herein are examples for illustration only and not to limit the alternatives in any way. The steps of the invention can be performed in a different order and still achieve desirable results. Other embodiments are within the scope of the following claims.

## Claims

1. In a centralized, packet-based network with a subscriber having a plurality of devices corresponding to a plurality of different networks, a method for handoff of a call from a first device of the subscriber to a second device of a subscriber, the method comprising:
assigning an identical unique identifier to each of a plurality of devices corresponding to a plurality of different networks, the unique identifier being associated with a subscriber associated with the plurality of devices;
receiving, by the centralized, packet-based network, a call associated with the unique identifier;
routing, by the centralized network, the call to a first device of the plurality of devices used on a first communications network of the plurality of networks;
establishing, by the centralized network, a call leg to a second device of the plurality of devices used on a second communications network of the plurality of networks; and
routing, by the centralized network, the call to the second device after the call leg is established.

2. The method of claim 1, wherein the unique identifier comprises a phone number.

3. The method of claim 1, wherein the unique identifier comprises a universal resource location (URL).

4. The method of claim 1, further comprising directing all calls to the unique identifier originating in the first network to be routed to the packet-based network.

5. The method of claim 4, further comprising employing, by in the first network, a dedicated circuit to route all calls originated by the first device to an edge server associated with the packet-based network.

6. The method of claim 4, further comprising adding, by in the first network, an indicator to all calls originated by the first device.

7. The method of claim 6, wherein the indicator comprises a prefix of one or more digits.

8. The method of claim 6, wherein the indicator comprises a carrier code.

9. The method of claim 1, further comprising
assigning a first edge server to facilitate communication between the centralized network and the first network; and
assigning a second edge server to facilitate communication between the centralized network and the second network.

10. The method of claim 1, further comprising receiving an indication to initiate a transfer of the call from the first device to the second device.

11. The method of claim 10, wherein the indication comprises a predetermined sequence of one or more DTMF tones associated with a sequence of key presses.

12. The method of claim 10, further comprising:
determining, by the first device, that the transfer is desired; and
transmitting the indication to the centralized network.

13. The method of claim 10, further comprising determining the indication based on periodically monitoring registration of the WLAN phone.

14. The method of claim 10, further comprising determining the indication based on periodically monitoring a signal strength.

15. The method of claim 10, further comprising using a data path through a cellular network for transmitting the indication.

16. The method of claim 15, wherein the data path is based on a general packet radio services (GPRS) standard, an enhanced data rates for GSM evolution (EDGE) standard, a universal mobile telecommunications system (UMTS) standard, a wideband code division multiple access (W-CDMA) standard, a 1 times radio transmission technology (1x-RTT) standard, a 1 times evolution - data only (1xEv-DO) standard, or a CDMA2000 standard.

17. The method of claim 1, further comprising determining, by the centralized network, to transfer the call from the first device to the second device.

18. The method of claim 1, wherein the centralized network is unrelated to the first network or the second network.

19. The method of claim 1, wherein the first network is unrelated to the second network.

20. The method of claim 1, wherein the first network is based on a technology different from the second network.

21. The method of claim 1, wherein the first telephony device is a first radio included in a single physical device and the second telephony device is a second radio included in the single physical device.

22. The method of claim 21, further comprising transitioning, by the first radio, into a standby mode when the second radio is in an active mode.

23. The method of claim 21, further comprising transitioning, by the second radio, into a standby mode when the first radio is in an active mode.

24. The method of claim 1, wherein the first network comprises a landline telephone network and the second network comprises a wireless telephone network.

25. The method of claim 1, wherein the first network comprises a landline telephone network, the method further comprising routing the call to the first device in the first network by using a LRN.

26. The method of claim 25, further comprising inserting the unique identifier into GAP digits.

27. The method of claim 1, wherein the first network comprises a cellular telephone network, the method further comprising routing the call to the first device in the first network by using a TLDN.

28. The method of claim 1, wherein neither the first network nor the second network comprise a private branch exchange (PBX).

29. A method comprising:
receiving, by a service provider network, a call associated with a subscriber having a plurality of devices associated with a plurality of different networks; and
performing, by the service provider network, a handoff of the call while the call is in process from a first device of the plurality of devices associated with a first communications network to a second device of the plurality of devices used on a second communications network.

30. A system comprising a plurality of servers configured to:
assign an identical unique identifier to each of a plurality of devices corresponding to a plurality of different networks, the unique identifier being associated with a subscriber associated with the plurality of devices;
receive, by the centralized, packet-based network, a call associated with the unique identifier;
route, by the centralized network, the call to a first device of the plurality of devices used on a first communications network of the plurality of networks;
establish, by the centralized network, a call leg to a second device of the plurality of devices used on a second communications network of the plurality of networks; and
route, by the centralized network, the call to the second device after the call leg is established.

31. A computer program product, tangibly embodied in an information carrier, for common telephony services for multiple devices associated with multiple networks, the computer program product including instructions being operable to cause data processing apparatus to:
assign an identical unique identifier to each of a plurality of devices corresponding to a plurality of different networks, the unique identifier being associated with a subscriber associated with the plurality of devices;
receive, by the centralized, packet-based network, a call associated with the unique identifier;
route, by the centralized network, the call to a first device of the plurality of devices used on a first communications network of the plurality of networks;
establish, by the centralized network, a call leg to a second device of the plurality of devices used on a second communications network of the plurality of networks; and
route, by the centralized network, the call to the second device after the call leg is established.

32. A system for common telephony services to multiple devices associated with multiple networks, the system comprising:
a means for routing a call from a first device associated with a first network to a service provider network; and
a means for transferring the call from the first device to a second device associated with a second network to a service provider network while the call is in process.
